# EUROPEAN PATENT APPLICATION

(11) **EP 4 668 718 A1**
(43) Date of publication of application: **24.12.2025**
(21) Application number: 24787902.6
(22) Date of filing: 25.03.2024
(51) Int. Cl.: H04L 69/16

(54) **INFORMATION TRANSMISSION METHOD AND APPARATUS**

(30) Priority: 13.04.2023 CN 202310431118
(71) Applicant: Huawei Technologies Co., Ltd., Shenzhen, Guangdong 518129 (CN)
(72) Inventor: FENG, Zhao, Shenzhen, Guangdong 518129 (CN); XIN, Yang, Shenzhen, Guangdong 518129 (CN); WANG, Yuan, Shenzhen, Guangdong 518129 (CN); ZHANG, Xuefei, Shenzhen, Guangdong 518129 (CN)
(74) Representative: Goddar, Heinz J.
(86) International application number: PCT/CN2024/083654
(87) International publication number: WO 2024/212796

(57) **Abstract**

An information transmission method and an apparatus are provided. In the information transmission method, a data analytics function network element receives user consent change information from a unified data management network element, where the user consent change information is used to represent that a first terminal device no longer authorizes a core network element to collect and use data of the first terminal device, and the data analytics function network element and a model repository function network element are the core network element. The data analytics function network element sends a model delete request to the model repository function network element based on the user consent change information, where the model delete request is used to request the model repository function network element to delete a first model corresponding to the first terminal device. It can be learned that, for a terminal device that no longer authorizes a core network element to collect and use data of the terminal device, the method can improve data privacy security of the terminal device.

## Description

This application claims priority to Chinese Patent Application No. 202310431118.9, filed with the China National Intellectual Property Administration on April 13, 2023 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and an apparatus.

### BACKGROUND

A data analytics function network element may collect data related to a terminal device from a network, and perform model training by using the collected data. The data analytics function network element may further store, in a model repository function network element, a model obtained through training. To ensure data privacy security of the terminal device, before the data analytics function network element collects the data related to the terminal device, the terminal device needs to perform data authorization. To be specific, the terminal device authorizes a network element in the network to collect and use the data related to the terminal device.

After the data analytics function network element obtains the model by using the data related to the terminal device and stores the model in the model repository function network element, the terminal device may cancel the data authorization. To be specific, the terminal device no longer authorizes the network element in the network to collect and use the data related to the terminal device. In this case, to ensure the data privacy security of the terminal device, how to process the model stored in the model repository function network element is an urgent problem to be resolved.

### SUMMARY

Embodiments of this application provide an information transmission method and an apparatus, to help improve data privacy security of a terminal device that cancels data authorization.

According to a first aspect, this application provides an information transmission method. The method may be applied to a data analytics function network element, may be applied to a chip in the data analytics function network element, or may be applied to a logical module or software that can implement all or some functions of the data analytics function network element. The following uses the data analytics function network element as an example for description. The method includes: The data analytics function network element receives user consent change information from a unified data management network element, where the user consent change information is used to represent that a first terminal device no longer authorizes a core network element to collect and use data of the first terminal device, and the data analytics function network element and a model repository function network element are the core network element. The data analytics function network element sends a model delete request to the model repository function network element based on the user consent change information. The model delete request is used to request the model repository function network element to delete a first model corresponding to the first terminal device.

It can be learned that, for a terminal device that no longer authorizes the core network element to collect and use data of the terminal device, namely, a terminal device that cancels data authorization, the data analytics function network element requests the model repository function network element to delete a model corresponding to the terminal device, to improve data privacy security of the terminal device.

In an optional implementation, that the data analytics function network element sends the model delete request to the model repository function network element based on the user consent change information includes: The data analytics function network element determines the first terminal device based on the user consent change information. The data analytics function network element determines, based on a stored correspondence between each of one or more models and a terminal device, the first model corresponding to the first terminal device from the one or more models. The data analytics function network element sends the model delete request to the model repository function network element, where the model delete request includes at least one of the following: an identifier of the first model, an address of the first model, an analytics identifier corresponding to the first model, and model filter information corresponding to the first model.

It can be learned that, the data analytics function network element that stores a correspondence between a model and a terminal device may determine, based on the correspondence between the model and the terminal device, the first model corresponding to the first terminal device, and notify, by using the model delete request, the model repository function network element of related information about the model. This helps the model repository function network element delete the first model, to improve the data privacy security of the terminal device that cancels the data authorization.

In an optional implementation, the method further includes: The data analytics function network element sends first information corresponding to each of one or more models to the model repository function network element, where the one or more models include the first model. The first information includes an identifier of each of one or more terminal devices, and the model delete request includes an identifier of the first terminal device. Alternatively, the first information includes an identifier of a device group to which one or more terminal devices belong, and the model delete request includes an identifier of a device group to which the first terminal device belongs. It can be learned that the data analytics function network element notifies the model repository function network element of the correspondence between the model and the terminal device, and notifies the model repository function network element of related information about the first terminal device by using the model delete request. This helps the model repository function network element determine, based on the correspondence between the model and the terminal device, the first model determined by the first terminal device, and delete the first model, to improve the data privacy security of the terminal device that cancels the data authorization.

In an optional implementation, the user consent change information includes the identifier of the first terminal device and a first indication, where the first indication is used to represent that the first terminal device no longer authorizes the core network element to collect and use the data of the first terminal device. This implementation helps the data analytics function network element determine the first terminal device that no longer authorizes the core network element to collect and use the data of the first terminal device.

In an optional implementation, the user consent change information is specifically used to represent that the first terminal device no longer authorizes the core network element to collect and use the data of the first terminal device based on a first purpose. The user consent change information further includes an indication used to represent the first purpose. The first indication is used to represent that the first terminal device no longer authorizes the core network element to collect and use the data of the first terminal device based on the first purpose. For example, the first purpose may be model training, and the user consent change information is specifically used to represent that the first terminal device no longer authorizes the core network element to collect and use the data of the first terminal device for model training.

In an optional implementation, the first model corresponds to a plurality of terminal devices. The method further includes: The data analytics function network element updates the first model by using data of a terminal device that is in the plurality of terminal devices corresponding to the first model and that is other than the first terminal device. The data analytics function network element sends a model storage request to the model repository function network element, where the model storage request is used to request the model repository function network element to store an updated first model. This implementation helps improve model use efficiency.

In an optional implementation, the model delete request is specifically a model obtaining request, and the model obtaining request is further used to obtain the first model from the model repository function network element.

In an optional implementation, before the data analytics function network element sends the model delete request to the model repository function network element based on the user consent change information, the method further includes: The data analytics function network element determines that a second indication from the unified data management network element is not received, where the second indication is used to represent that when the first terminal device no longer authorizes the core network element to collect and use the data of the first terminal device, the first terminal device allows the core network element to retain the first model. In this implementation, when receiving no second indication, the data analytics function network element may consider that when the first terminal device no longer authorizes the core network element to collect and use the data of the first terminal device, the first terminal device does not allow the core network element to retain the first model. In this case, the data analytics function network element performs the operation of sending the model delete request to the model repository function network element based on the user consent change information, to improve data privacy security of the first terminal device that cancels the data authorization.

In an optional implementation, before the data analytics function network element sends the model delete request to the model repository function network element based on the user consent change information, the method further includes: The data analytics function network element receives a third indication from the unified data management network element, where the third indication is used to represent that when the first terminal device no longer authorizes the core network element to collect and use the data of the first terminal device, the first terminal device does not allow the core network element to retain the first model. In this implementation, when receiving the third indication, the data analytics function network element may learn that when the first terminal device no longer authorizes the core network element to collect and use the data of the first terminal device, the first terminal device does not allow the core network element to retain the first model. In this case, the data analytics function network element performs the operation of sending the model delete request to the model repository function network element based on the user consent change information, to improve the data privacy security of the first terminal device that cancels the data authorization.

In an optional implementation, the user consent change information further includes a third indication, and the third indication is used to represent that when the first terminal device no longer authorizes the core network element to collect and use the data of the first terminal device, the first terminal device does not allow the core network element to retain the first model. In other words, the third indication may be carried in the user consent change information. When learning that the first terminal device no longer authorizes the core network element to collect and use the data of the first terminal device, the data analytics function network element further learns that when the first terminal device no longer authorizes the core network element to collect and use the data of the first terminal device, the first terminal device does not allow the core network element to retain the first model. In this case, the data analytics function network element performs the operation of sending the model delete request to the model repository function network element based on the user consent change information, to improve the data privacy security of the first terminal device that cancels the data authorization.

According to a second aspect, this application provides an information transmission method. The method may be applied to a model repository function network element, may be applied to a chip in the model repository function network element, or may be applied to a logical module or software that can implement all or some functions of the model repository function network element. The following uses the model repository function network element as an example for description. The method includes: The model repository function network element receives a model delete request from a data analytics function network element, where the model delete request is used to request the model repository function network element to delete a first model corresponding to a first terminal device, the first terminal device is a terminal device that no longer authorizes a core network element to collect and use data of the first terminal device, and the data analytics function network element and the model repository function network element are the core network element. The model repository function network element deletes the first model based on the model delete request.

It can be learned that, for a terminal device that no longer authorizes the core network element to collect and use data of the terminal device, namely, a terminal device that cancels data authorization for the core network elements, the model repository function network element deletes a model corresponding to the terminal device, to improve data privacy security of the terminal device.

In an optional implementation, the model delete request includes at least one of the following: an identifier of the first model, an address of the first model, an analytics identifier corresponding to the first model, and model filter information corresponding to the first model. This implementation helps the model repository function network element determine the first model that needs to be deleted, and delete the first model, to improve the data privacy security of the terminal device that cancels the data authorization.

In an optional implementation, the model delete request includes an identifier of the first terminal device or an identifier of a device group to which the first terminal device belongs. That the model repository function network element deletes the first model based on the model delete request includes: The model repository function network element determines the first terminal device based on the model delete request. The model repository function network element determines, based on a stored correspondence between each of one or more models and a terminal device, the first model corresponding to the first terminal device from the one or more models. The model repository function network element deletes the first model.

It can be learned that, the model repository function network element that stores a correspondence between a model and a terminal device may determine, based on related information about the first terminal device in the model delete request, the first model that needs to be deleted, and delete the first model, to improve the data privacy security of the terminal device that cancels the data authorization.

In an optional implementation, the method further includes: The model repository function network element receives first information that corresponds to each of one or more models and that is from the data analytics function network element, where the one or more models include the first model. The model repository function network element stores a correspondence between each model and a terminal device indicated by the first information corresponding to each model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the first model corresponds to a plurality of terminal devices. The method further includes: The model repository function network element receives a model storage request from the data analytics function network element, where the model storage request is used to request the model repository function network element to store an updated first model. The model repository function network element stores the updated first model. The updated first model is obtained by updating the first model by using data of a terminal device that is in the plurality of terminal devices corresponding to the first model and that is other than the first terminal device. This implementation helps improve model use efficiency.

In an optional implementation, the model delete request is specifically a model obtaining request, and the model obtaining request is further used to obtain the first model from the model repository function network element.

According to a third aspect, this application provides an information transmission method. The method is described from a perspective of interaction between a data analytics function network element and a model repository function network element. The method includes: The data analytics function network element receives user consent change information from a unified data management network element, where the user consent change information is used to represent that a first terminal device no longer authorizes a core network element to collect and use data of the first terminal device, and the data analytics function network element and the model repository function network element are the core network element. The data analytics function network element sends a model delete request to the model repository function network element based on the user consent change information. The model delete request is used to request the model repository function network element to delete a first model corresponding to the first terminal device. The model repository function network element deletes the first model based on the model delete request.

It can be learned that, for a terminal device that no longer authorizes the core network element to collect and use data of the terminal device, namely, a terminal device that cancels data authorization for the core network elements, the data analytics function network element requests the model repository function network element to delete a model corresponding to the terminal device, and the model repository function network element deletes the model corresponding to the terminal device. In this way, data privacy security of the terminal device may be improved.

In an optional implementation, that the data analytics function network element sends the model delete request to the model repository function network element based on the user consent change information includes: The data analytics function network element determines the first terminal device based on the user consent change information. The data analytics function network element determines, based on a stored correspondence between each of one or more models and a terminal device, the first model corresponding to the first terminal device from the one or more models. The data analytics function network element sends the model delete request to the model repository function network element, where the model delete request includes at least one of the following: an identifier of the first model, an address of the first model, an analytics identifier corresponding to the first model, and model filter information corresponding to the first model.

In an optional implementation, the model delete request includes an identifier of the first terminal device or an identifier of a device group to which the first terminal device belongs. That the model repository function network element deletes the first model based on the model delete request includes: The model repository function network element determines the first terminal device based on the model delete request. The model repository function network element determines, based on the stored correspondence between each of the one or more models and the terminal device, the first model corresponding to the first terminal device from the one or more models. The model repository function network element deletes the first model.

In an optional implementation, the method further includes: The data analytics function network element sends first information corresponding to each of one or more models to the model repository function network element, where the one or more models include the first model. The model repository function network element stores a correspondence between each model and a terminal device indicated by the first information corresponding to each model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the user consent change information includes the identifier of the first terminal device and a first indication, where the first indication is used to represent that the first terminal device no longer authorizes the core network element to collect and use the data of the first terminal device.

In an optional implementation, the user consent change information is specifically used to represent that the first terminal device no longer authorizes the core network element to collect and use the data of the first terminal device based on a first purpose. The user consent change information further includes the first purpose. The first indication is used to represent that the first terminal device no longer authorizes the core network element to collect and use the data of the first terminal device based on the first purpose.

In an optional implementation, the first model corresponds to a plurality of terminal devices. The method further includes: The data analytics function network element updates the first model by using data of a terminal device that is in the plurality of terminal devices corresponding to the first model and that is other than the first terminal device. The data analytics function network element sends a model storage request to the model repository function network element, where the model storage request is used to request the model repository function network element to store an updated first model. The model repository function network element stores the updated first model.

In an optional implementation, the model delete request is specifically a model obtaining request, and the model obtaining request is further used to obtain the first model from the model repository function network element.

In an optional implementation, before the data analytics function network element sends the model delete request to the model repository function network element based on the user consent change information, the method further includes: The data analytics function network element determines that a second indication from the unified data management network element is not received, where the second indication is used to represent that when the first terminal device no longer authorizes the core network element to collect and use the data of the first terminal device, the first terminal device allows the core network element to retain the first model.

In an optional implementation, before the data analytics function network element sends the model delete request to the model repository function network element based on the user consent change information, the method further includes: The unified data management network element sends a third indication to the data analytics function network element, where the third indication is used to represent that when the first terminal device no longer authorizes the core network element to collect and use the data of the first terminal device, the first terminal device does not allow the core network element to retain the first model.

In an optional implementation, the user consent change information further includes a third indication, and the third indication is used to represent that when the first terminal device no longer authorizes the core network element to collect and use the data of the first terminal device, the first terminal device does not allow the core network element to retain the first model.

According to a fourth aspect, this application provides a communication system, where the system includes:
a data analytics function network element, configured to receive user consent change information from a unified data management network element, where the user consent change information is used to represent that a first terminal device no longer authorizes a core network element to collect and use data of the first terminal device, and the data analytics function network element and a model repository function network element are the core network element.

The data analytics function network element is further configured to send a model delete request to the model repository function network element based on the user consent change information, where the model delete request is used to request the model repository function network element to delete a first model corresponding to the first terminal device.

The model repository function network element is configured to delete the first model based on the model delete request.

It can be learned that, for a terminal device that no longer authorizes the core network element to collect and use data of the terminal device, namely, a terminal device that cancels data authorization for the core network elements, the data analytics function network element requests the model repository function network element to delete a model corresponding to the terminal device, and the model repository function network element deletes the model corresponding to the terminal device. In this way, data privacy security of the terminal device may be improved.

In an optional implementation, the data analytics function network element sends the model delete request to the model repository function network element based on the user consent change information, and is specifically configured to: determine the first terminal device based on the user consent change information; determine, based on a stored correspondence between each of one or more models and a terminal device, the first model corresponding to the first terminal device from the one or more models; and send the model delete request to the model repository function network element, where the model delete request includes at least one of the following: an identifier of the first model, an address of the first model, an analytics identifier corresponding to the first model, and model filter information corresponding to the first model.

In an optional implementation, the model delete request includes an identifier of the first terminal device or an identifier of a device group to which the first terminal device belongs. The model repository function network element deletes the first model based on the model delete request, and is specifically configured to: determine the first terminal device based on the model delete request; determine, based on the stored correspondence between each of the one or more models and the terminal device, the first model corresponding to the first terminal device from the one or more models; and delete the first model.

In an optional implementation, the data analytics function network element is further configured to send first information corresponding to each of one or more models to the model repository function network element, where the one or more models include the first model. The model repository function network element is further configured to store a correspondence between each model and a terminal device indicated by the first information corresponding to each model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the user consent change information includes the identifier of the first terminal device and a first indication, where the first indication is used to represent that the first terminal device no longer authorizes the core network element to collect and use the data of the first terminal device.

In an optional implementation, the user consent change information is specifically used to represent that the first terminal device no longer authorizes the core network element to collect and use the data of the first terminal device based on a first purpose. The user consent change information further includes the first purpose. The first indication is used to represent that the first terminal device no longer authorizes the core network element to collect and use the data of the first terminal device based on the first purpose.

In an optional implementation, the first model corresponds to a plurality of terminal devices. The data analytics function network element is further configured to update the first model by using data of a terminal device that is in the plurality of terminal devices corresponding to the first model and that is other than the first terminal device. The data analytics function network element is further configured to send a model storage request to the model repository function network element, where the model storage request is used to request the model repository function network element to store an updated first model. The model repository function network element is further configured to store the updated first model.

In an optional implementation, the model delete request is specifically a model obtaining request, and the model obtaining request is further used to obtain the first model from the model repository function network element.

In an optional implementation, the data analytics function network element is further configured to determine, before sending the model delete request to the model repository function network element based on the user consent change information, that a second indication from the unified data management network element is not received, where the second indication is used to represent that when the first terminal device no longer authorizes the core network element to collect and use the data of the first terminal device, the first terminal device allows the core network element to retain the first model.

In an optional implementation, the system further includes the unified data management network element. The unified data management network element is configured to send a third indication to the data analytics function network element, where the third indication is used to represent that when the first terminal device no longer authorizes the core network element to collect and use the data of the first terminal device, the first terminal device does not allow the core network element to retain the first model.

In an optional implementation, the user consent change information further includes a third indication, and the third indication is used to represent that when the first terminal device no longer authorizes the core network element to collect and use the data of the first terminal device, the first terminal device does not allow the core network element to retain the first model.

According to a fifth aspect, this application further provides a communication apparatus. The communication apparatus may be a data analytics function network element or a model repository function network element, may be a chip in the data analytics function network element or the model repository function network element, or may be a logical module or software that can implement all or some functions of the data analytics function network element or the model repository function network element. The communication apparatus has a function of implementing some or all of the implementations of the first aspect, or has a function of implementing some or all of the function implementations of the second aspect. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit. The processing unit is configured to control the communication unit to perform data/signaling receiving and sending.

The communication unit is configured to receive user consent change information from a unified data management network element, where the user consent change information is used to represent that a first terminal device no longer authorizes a core network element to collect and use data of the first terminal device, and the communication apparatus and the model repository function network element are the core network element.

The processing unit is configured to send a model delete request to the model repository function network element based on the user consent change information, where the model delete request is used to request the model repository function network element to delete a first model corresponding to the first terminal device.

In addition, for another optional implementation of the communication apparatus in this aspect, refer to the related content of the first aspect. Details are not described herein again.

In another implementation, the communication apparatus includes a communication unit and a processing unit. The processing unit is configured to control the communication unit to perform data/signaling receiving and sending.

The communication unit is configured to receive a model delete request from the data analytics function network element, where the model delete request is used to request the communication apparatus to delete a first model corresponding to a first terminal device, the first terminal device is a terminal device that no longer authorizes a core network element to collect and use data of the first terminal device, and the data analytics function network element and the communication apparatus are the core network element.

The processing unit is configured to delete the first model based on the model delete request.

In addition, for another optional implementation of the communication apparatus in this aspect, refer to the related content of the second aspect. Details are not described herein again.

For example, the communication unit may be a transceiver or a communication interface, the storage unit may be a memory, and the processing unit may be a processor. The processor is coupled to the memory. The memory is configured to store a program or an instruction processor. The processor may be configured to enable, when the program or instructions are executed by the processor, the communication apparatus to perform the method according to the first aspect or the second aspect. The transceiver or the communication interface may be configured to receive and send signals and/or data.

In an implementation, the communication apparatus includes a processor and a transceiver.

The transceiver is configured to receive user consent change information from a unified data management network element, where the user consent change information is used to represent that a first terminal device no longer authorizes a core network element to collect and use data of the first terminal device, and the communication apparatus and the model repository function network element are the core network element.

The processor is configured to send a model delete request to the model repository function network element based on the user consent change information, where the model delete request is used to request the model repository function network element to delete a first model corresponding to the first terminal device.

In addition, for another optional implementation of the communication apparatus in this aspect, refer to the related content of the first aspect. Details are not described herein again.

In another implementation, the communication apparatus includes a processor and a transceiver.

The transceiver is configured to receive a model delete request from the data analytics function network element, where the model delete request is used to request the model repository function network element to delete a first model corresponding to a first terminal device, the first terminal device is a terminal device that no longer authorizes a core network element to collect and use data of the first terminal device, and the data analytics function network element and the communication apparatus are the core network element.

The processor is configured to delete the first model based on the model delete request.

In addition, for another optional implementation of the communication apparatus in this aspect, refer to the related content of the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system-on-a-chip (System-on-a-Chip, SoC). Whether the components are separately disposed on different chips or integrated and disposed on one or more chips usually depends on a need of a product design. This embodiment of this application imposes no limitation on specific implementations of the foregoing components.

According to a sixth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal, and then a processed signal arrives at the transceiver (or the communication interface). Similarly, when the processor receives the foregoing input signal, the transceiver (or the communication interface) receives the signal, and inputs the signal into the processor. Further, after the transceiver (or the communication interface) receives the signal, other processing may further need to be performed on the signal, and then a processed signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations of sending and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventh aspect, this application further provides a communication system. The system includes the data analytics function network element and the model repository function network element in the foregoing aspects. In another possible design, the system may further include another device that interacts with the data analytics function network element and/or the model repository function network element in solutions provided in this application.

According to an eighth aspect, this application provides a computer-readable storage medium. The computer-readable storage medium stores a computer program. When the computer program is run, the method according to either the first aspect or the second aspect is performed.

According to a ninth aspect, this application further provides a computer program product including instructions. The computer program product includes computer program code. When the computer program code is run, the method according to either the first aspect or the second aspect is performed.

According to a tenth aspect, this application provides a chip system. The chip system includes a processor and an interface. The interface is configured to obtain a program or instructions, and the processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a system architecture according to an embodiment of this application;
FIG. 2 is a diagram of a structure of a communication system according to an embodiment of this application;
FIG. 3 is a diagram of obtaining user consent information according to an embodiment of this application;
FIG. 4 is a diagram of a framework for storing an analytics result and/or data according to an embodiment of this application;
FIG. 5 is a diagram of data storage according to an embodiment of this application;
FIG. 6 is another diagram of data storage according to an embodiment of this application;
FIG. 7 is a diagram of data obtaining according to an embodiment of this application;
FIG. 8 is a schematic flowchart of an information transmission method according to an embodiment of this application;
FIG. 9 is a diagram of another information transmission method according to an embodiment of this application;
FIG. 10 is a diagram of another information transmission method according to an embodiment of this application;
FIG. 11 is a diagram of another information transmission method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of a chip according to an embodiment of this application.

### DESCRIPTION OF EMBODIMENTS

The following describes embodiments of this application with reference to the accompanying drawings in embodiments of this application.

To better understand an information transmission method disclosed in embodiments of this application, a communication system to which embodiments of this application are applicable is first described.

Technical solutions in embodiments of this application may be applied to various communication systems, for example, a global system for mobile communications, a long term evolution (long term evolution, LTE) system, a universal mobile telecommunications system, a 4th generation (4th generation, 4G) mobile communication technology system, a next-generation radio access network (next-generation radio access network, NG-RAN), a new radio (new radio, NR) technology system, and a 5th generation mobile communication technology (5th generation mobile networks, 5G) system. With continuous development of communication technologies, the technical solutions in embodiments of this application may be further applied to a subsequent evolved communication system, for example, a 6th generation mobile communication technology (6th generation mobile networks, 6G) system or 7th generation mobile communication technology (7th generation mobile networks, 7G) system.

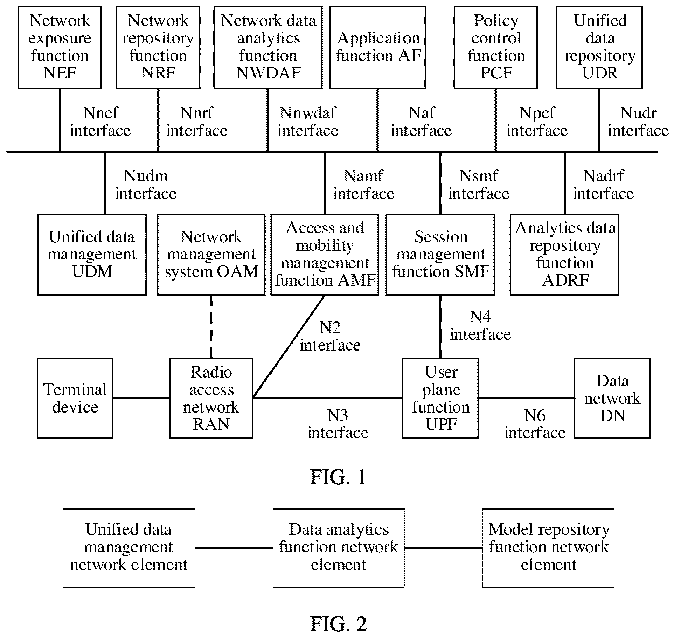

FIG. 1 is a diagram of a system architecture according to an embodiment of this application. The system architecture is a 5G network architecture based on a service-based interface. The system architecture may include a network data analytics function (network data analytics function, NWDAF) network element, an analytics data repository function (analytics data repository function, ADRF) network element, a unified data management (unified data management, UDM) network element, an application function (application function, AF) network element, a radio access network (radio access network, RAN) device, an operations, administration and management (operations, administration and management, OAM) device (namely, a network management system), an access and mobility management function (access and mobility management function, AMF) network element, a user plane function (user plane function, UPF) network element, a data network (data network, DN), a network exposure function (network exposure function, NEF) network element, a network repository function (network repository function, NRF) network element, a session management function (session management function, SMF) network element, a policy control function (policy control function, PCF) network element, a unified data repository (unified data repository, UDR) network element, and a terminal device.

FIG. 2 is a diagram of a structure of a communication system according to an embodiment of this application. The communication system may include a unified data management network element, a data analytics function network element, and a model repository function network element. The unified data management network element may be configured to manage subscription information of a terminal device. The data analytics function network element may be configured to collect data from network elements and analyze/use the collected data. For example, the data analytics function network element may be configured to collect data from network function (network function, NF) network elements, perform model training by using the collected data, and the like. The model repository function network element may be configured to store a model. In a 5G communication system, the unified data management network element may be a UDM network element or a UDR network element in FIG. 1, the data analytics function network element may be an NWDAF network element in FIG. 1, and the model repository function network element may be an ADRF network element in FIG. 1.

In embodiments of this application, the NF network elements may be, for example, a PCF network element, an AMF network element, an SMF network element, a NEF network element, an AF network element, the NWDAF network element, and the like in FIG. 1. The NF is a minimum deployment granularity in a 5G network. The NF network element may perform communication in a service-based manner based on an open application programming interface (application programming interface, API). Different NF network elements may implement different functions and provide different services. In addition, an NF network element may expose related network information to another NF network element in an event exposure (event exposure) manner.

The NWDAF network element has functions of data collection, model training, data analytics, and model inference, and may be configured to collect related data from a network element, a third-party service server, a terminal device, or a network management system, perform data analytics based on the related data to obtain an analytics result, and provide the analytics result for the network element, the third-party service server, the terminal device, or the network management system. The analytics result may assist the network in selecting a service quality of service parameter, assist the network in performing traffic routing, assist the network in selecting a background data transmission policy, or the like. In addition, the NWDAF network element may be further configured to collect the related data from the network element, the third-party service server, the terminal device, or the network management system, perform model training based on the related data to obtain an artificial intelligence (artificial intelligence, AI) model or a machine learning (machine learning, ML) model, and provide the AI model/ML model for another NWDAF network element. The AI model/ML model may be used to assist the NWDAF network element in generating a data analytics result based on the related data. The ADRF network element has functions of enabling a consumer (consumer) to store and retrieve data, analytics, and the like. The UDM network element may be configured to perform subscription management, access authorization, authentication information generation, and the like on a user. The UDR network element may be configured to store and provide subscription data, policy data, data related to capability exposure, and the like.

The terminal device may also be referred to as user equipment (user equipment, UE), a terminal, an access terminal, a subscriber unit, a subscriber station, a mobile station, a remote station, a remote terminal, a mobile device, a user terminal, a user agent, or a user apparatus, and may be used in a 4G system, a 5G system, a 6G system, or the like. The terminal device in embodiments of this application may be a joint device that transmits and receives a digital signal on a common telephone line, or may be a cellular phone, a cordless phone, a session initiation protocol (session initiation protocol, SIP) phone, a wireless local loop (wireless local loop, WLL) station, a personal digital assistant (personal digital assistant, PDA), a mobile phone (mobile phone), a tablet computer (Pad), a computer having a wireless transceiver function, a head mounted display (head mounted display, HMD), a VR terminal device (for example, VR glasses), an augmented reality (augmented reality, AR) terminal device (for example, AR glasses), a mixed reality (mixed reality, MR) terminal device, a wireless terminal in industrial control (industrial control), a processing device connected to a wireless modem, a tactile terminal device, a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), the foregoing RSU of a wireless terminal type, a wearable terminal device, a terminal device in the 5G network, a terminal device in a future evolved public land mobile network (public land mobile network, PLMN), or the like.

For ease of understanding embodiments disclosed in this application, the following two points are described.

(1) In embodiments disclosed in this application, a scenario of the 5G communication system in a wireless communication network is used as an example to describe a scenario. It should be noted that the solutions in embodiments disclosed in this application may alternatively be applied to another wireless communication network, and a corresponding name may also be replaced with a name of a corresponding function in the another wireless communication network.

(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Related concepts in embodiments of this application are then briefly described.

### 1. Data authorization

Whether a terminal device performs data authorization indicates whether the terminal device authorizes network elements (for example, core network elements) in the network to collect and use data related to the terminal device for a specific purpose. That the terminal device cancels the data authorization indicates that the terminal device that originally performs the data authorization no longer performs the data authorization. In other words, the terminal device no longer authorizes the network elements (for example, the core network elements) in the network to collect and use the data related to the terminal device for the specific purpose. For ease of description, "data of the terminal device" is used to represent the data related to the terminal device.

To ensure data privacy security of the terminal device, before the network element in the network collects and uses the data of the terminal device, the terminal device needs to perform the data authorization. Specifically, the unified data management network element may store user consent (user consent) information used as subscription information. User consent information corresponding to the terminal device may include: an identifier of the terminal device, an indication #1 used to represent whether the terminal device performs the data authorization, and an indication #2 indicating a purpose of data collection, where the purpose of the data collection is, for example, analytics generation or model training. For example, user consent information corresponding to a terminal device #1 includes an identifier of the terminal device #1, an indication #1 used to represent that the terminal device #1 performs the data authorization, and an indication #2 indicating that a purpose of data collection is model training, indicating that the terminal device #1 authorizes the network element in the network to collect and use data of the terminal device #1 for model training.

Optionally, a value of the indication #1 may be "0" or "1", to indicate whether the terminal device performs the data authorization. For example, when the value of the indication #1 is "1", it indicates that the terminal device authorizes the network element in the network to collect and use the data of the terminal device. When the value of the indication #1 is "0", it indicates that a first terminal device does not authorize the network element in the network to collect and use data of the first terminal device. Alternatively, when the value of the indication #1 is "1", it indicates that the terminal device does not authorize the network element in the network to collect and use the data of the terminal device. When the value of the indication #1 is "0", it indicates that the terminal device authorizes the network element in the network to collect and use the data of the terminal device. In addition, the value of the indication #1 may alternatively be represented in another manner. For example, when the value of the indication #1 is "true", it indicates that the terminal device authorizes the network element in the network to collect and use the data of the terminal device. When the value of the indication #1 is "false", it indicates that the terminal device does not authorize the network element in the network to collect and use the data of the terminal device. This is not limited.

For example, in the 5G communication system, the NWDAF network element may be configured to collect the data of the terminal device from the network, and perform model training or generate an analytics result based on the collected data. For example, to train an ML model used to analyze mobility of the terminal device, the NWDAF network element needs to collect, from the AMF network element, information such as a location of the terminal device, a type of the terminal device, and a mobile trend of the terminal device. For another example, to generate a communication performance analytics result of the terminal device, the NWDAF network element needs to collect, from the SMF network element, the identifier of the terminal device, a session behavior trend of the terminal device (for example, a session establishment/release status), and a communication trend of the terminal device (for example, a throughput change of the terminal device), and collect, from a UPF network element, communication information (for example, communication start/end time, an uplink/downlink data rate of the terminal device, and a throughput) of the terminal device.

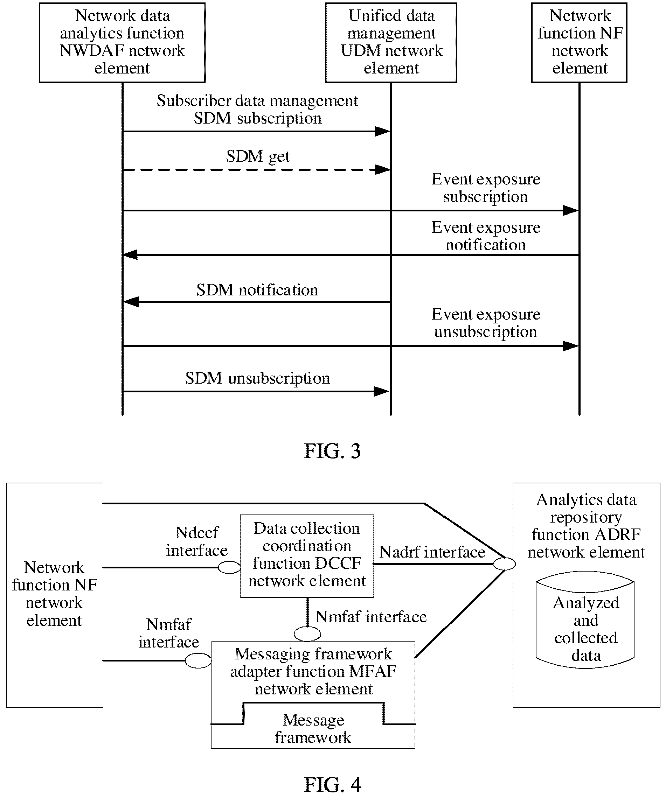

Before the NWDAF network element collects the data of the terminal device from the network, the terminal device needs to perform the data authorization to protect the data privacy security of the terminal device. With reference to FIG. 3, an NWDAF network element obtains user consent information from a UDM network element. After determining, based on the user consent information, that a terminal device performs data authorization, the NWDAF network element may subscribe to data of the terminal device from an NF network element by using an event exposure subscription (Nnf_EventExposure_Subscribe) service operation. The NF network element feeds back an event exposure notification (Nnf_EventExposure_Notify) to the NWDAF network element.

That the NWDAF network element obtains the user consent information from the UDM network element may include: The NWDAF network element subscribes to the user consent information from the UDM network element by using a subscriber data management (subscriber data management, SDM) subscription (Nudm_SDM_Subscribe) service operation. Alternatively, the NWDAF network element obtains the user consent information from the UDM network element by using an SDM get (Nudm_SDM_Get) service operation, as shown by a dashed line in FIG. 3. If the NWDAF network element subscribes to the user consent information from the UDM network element, when the user consent information changes (for example, the terminal device no longer authorizes a network element in a network to collect and use the data of the terminal device), the UDM network element notifies, by using an SDM notification (Nudm_SDM_Notify) service operation, the NWDAF network element of a message that the user consent information changes. Then, the NWDAF network element unsubscribes from the data of the terminal device with the NF network element by using an event exposure unsubscription (Nnf_EventExposure_Unsubscribe) service operation. The NWDAF network element may further unsubscribe from a change notification of the user consent information with the UDM network element by using an SDM unsubscription (Nudm_SDM_Unsubscribe) service operation.

### 2. Model single-point delete technology

Usually, training a model needs to use data of a large quantity of terminal devices. A form of the model may be, for example, a neural network model, a logistic regression model, a Bayesian model, or a decision tree model. This is not limited. For a model that has been trained, in a plurality of needed terminal devices, if several terminal devices do not perform the data authorization, or several terminal devices perform the data authorization before model training but cancel the data authorization after the model is trained, data of the terminal device that does not perform the data authorization and data of the terminal device that cancels the data authorization cannot be used anymore. In this case, in a manner, to ensure data privacy security of the terminal device that does not perform the data authorization or cancels the data authorization, data of a terminal device in the plurality of terminal devices other than the terminal device that does not perform the data authorization and the terminal device that cancels the data authorization is used to perform the model training again. However, in this manner, model training costs are greatly increased.

In the model single-point delete technology, the model is updated by deleting data of a single terminal device from the model, without retraining the entire model. This can reduce model update costs while ensuring that a model accuracy loss is small. In the model single-point delete technology, a modular idea is mainly used, an original data set (data of a plurality of terminal devices) is sliced and isolated, sub-models are separately trained by using different sliced data, and finally, all the trained sub-models are aggregated to obtain a final model. When data of a terminal device needs to be deleted, the data of the terminal device needs to be deleted only from corresponding sliced data, and then sliced data obtained by deleting the data of the terminal device is used to retrain a sub-model. In the sub-model, training may be started by backtracking to a specific training step. Finally, a sub-model obtained through retraining is aggregated with another sub-model to obtain an updated model.

For example, the original data set includes data of each of a terminal device #1 to a terminal device #8. The original data set is sliced and isolated to obtain sliced data #1 including the data of the terminal device #1 to the terminal device #3, sliced data #2 including the data of the terminal device #4 to the terminal device #6, and sliced data #3 including the data of the terminal device #7 and the terminal device #8. The sliced data #1 is used to perform training to obtain a sub-model #1, the sliced data #2 is used to perform training to obtain a sub-model #2, the sliced data #3 is used to perform training to obtain a sub-model #3, and then the sub-model #1, the sub-model #2, and the sub-model #3 are aggregated to obtain a model #1. If the terminal device #2 cancels the data authorization, the model single-point delete technology includes: deleting the data of the terminal device #2 from the sliced data #1 to obtain sliced data #4 (including the data of the terminal device #1 and the data of the terminal device #3), performing training by using the sliced data #4 to obtain a sub-model #4, and aggregating the sub-model #4, the sub-model #2, and the sub-model #3 to obtain a model #2. In comparison with the model #1, obtaining of the model #2 does not use the data of the terminal device #1. This helps ensure data privacy security of the terminal device #1.

### 3. Framework for storing an analytics result and data

In a 5G communication system, an ADRF network element may be configured to store data and/or an analytics result, and another NF network element may obtain the data and/or the analytics result from the ADRF network element. The following uses data as an example for description with reference to FIG. 4. A procedure of storing and obtaining an analytics result is similar to a procedure of storing and obtaining the data. Details are not described again.

With reference to FIG. 4, a framework for storing the analytics result and/or the data may include an NF network element, a DCCF network element, an MFAF network element, and an ADRF network element. The NF network element may store the data in the ADRF network element or retrieve the data from the ADRF network element by using an Nadrf service provided by the ADRF network element. For example, the NF network element may send a data management storage request (Nadrf_DataManagement_StorageRequest) to the ADRF network element, to request the ADRF network element to store the data. The Nadrf_DataManagement_StorageRequest may carry the data that needs to be stored.

The NF network element may alternatively store the data in the ADRF network element or obtain the data from the ADRF network element via the DCCF network element. For example, the NF network element may send, to the DCCF network element, a request carrying data source indication information, to request the ADRF network element to store data of a data source. The DCCF network element may determine the ADRF network element by using the request from the NF network element, or determine the ADRF network element based on a configuration in the DCCF network element. The DCCF network element then stores the data in the ADRF network element. The data source indication information may indicate a data source type or an identity (identity, ID) of a data source set. The data source type is, for example, an NF type (NF Type) like an AMF, an SMF, or a UPF. The ID of the data source set is, for example, an NF set ID (NF Set ID) indicating a group of NF network elements.

In an optional manner, that the DCCF network element stores the data in the ADRF network element includes: After receiving the data of the data source, the DCCF network element directly requests, by using the Nadrf service or a data management notification (Ndccf_DataManagement_notification) service operation, the ADRF network element to store the data of the data source.

In another optional manner, that the DCCF network element stores the data in the ADRF network element includes: After receiving the data of the data source, the DCCF network element indirectly stores the data of the data source in the ADRF network element via a third-party messaging framework adapter function (messaging framework adapter function, MFAF) network element. In other words, the DCCF network element may send the data to the MFAF network element by using a third-party data management configuration (Nmfaf_3da DataManagement_Configure) service operation, and then the MFAF network element requests, by using a data management notification (Nmfaf_DataManagement_notification) service operation, the ADRF network element to store the data.

The NF network element may alternatively store the data in the ADRF network element or obtain the data from the ADRF network element via the MFAF network element. For example, the NF network element may send, to the MFAF network element, a request carrying data source indication information. After receiving data of a data source, the MFAF network element requests the ADRF network element to store the data of the data source.

### 4. Data storage

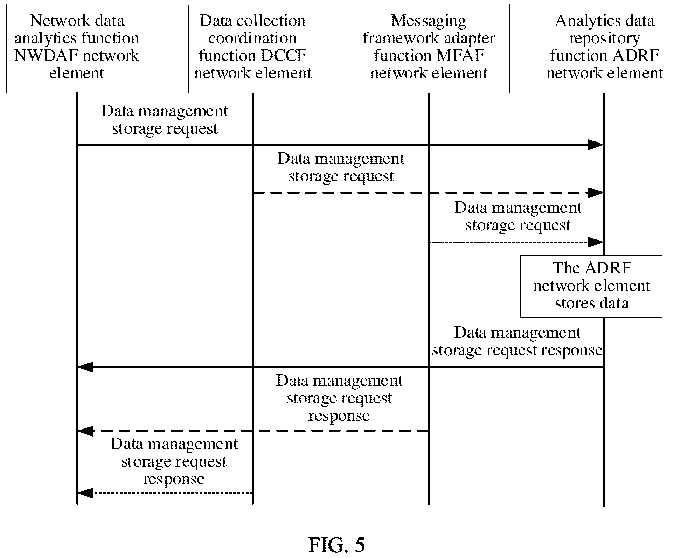

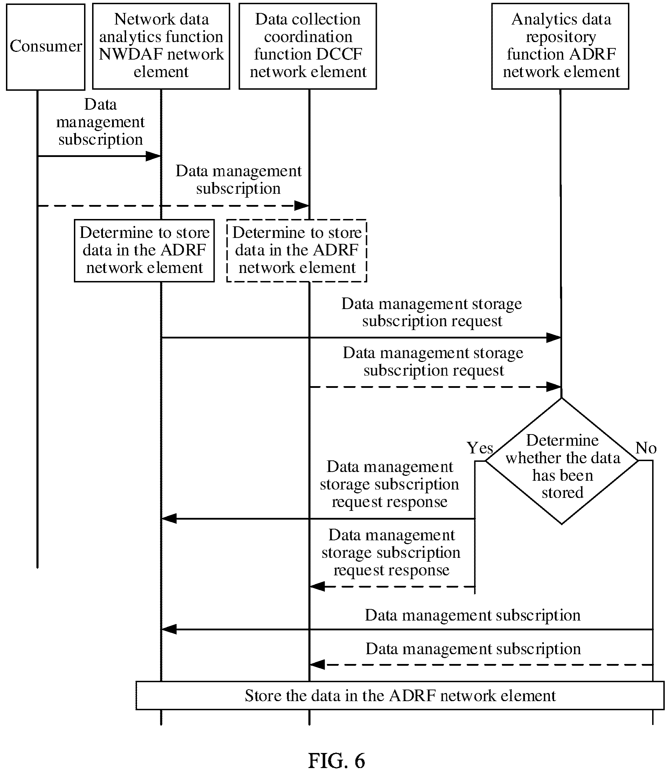

FIG. 5 and FIG. 6 show examples of two manners of storing data in an ADRF network element, as described below.

In an optional manner, with reference to FIG. 5, an NWDAF network element/a DCCF network element/an MFAF network element requests, by using a data management storage request (Nadrf_DataManagement_StorageRequest) service operation, the ADRF network element to store the data. The ADRF network element stores the data, and feeds back a response to the NWDAF network element/the DCCF network element/the MFAF network element by using a data management storage request response (Nadrf_DataManagement_StorageRequest Response) service operation.

In another optional manner, with reference to FIG. 6, an example in which an NWDAF network element stores the data in the ADRF network element is used for description (operations shown by solid lines in FIG. 6). A DCCF network element stores the data in the ADRF network element in a similar way (operations shown by dashed lines in FIG. 6). Details are not described again. After receiving a data management subscription (Nnwdaf_DataManagement_Subscribe) from a consumer, the NWDAF network element determines that the data needs to be stored in the ADRF network element, then sends a subscription request to the ADRF network element by using a data management storage subscription request (Nadrf_DataManagement_StorageSubscriptionRequest) service operation, and specifies, in the subscription request, the data to be stored in the ADRF network element. The ADRF network element checks whether the data has been stored. If the ADRF network element determines that the data specified by the NWDAF network element has been stored, the ADRF network element notifies, by using a data management storage subscription request response (Nadrf_DataManagement_StorageSubscriptionRequest Response) service operation, the NWDAF network element that the data has been stored. If the ADRF network element determines that the data specified by the NWDAF network element has not been stored, the ADRF network element subscribes to related data from the NWDAF network element by using a data management subscription (Nnwdaf_DataManagement_Subscription) service operation. The ADRF network element stores data obtained through subscription.

### 5. Data obtaining

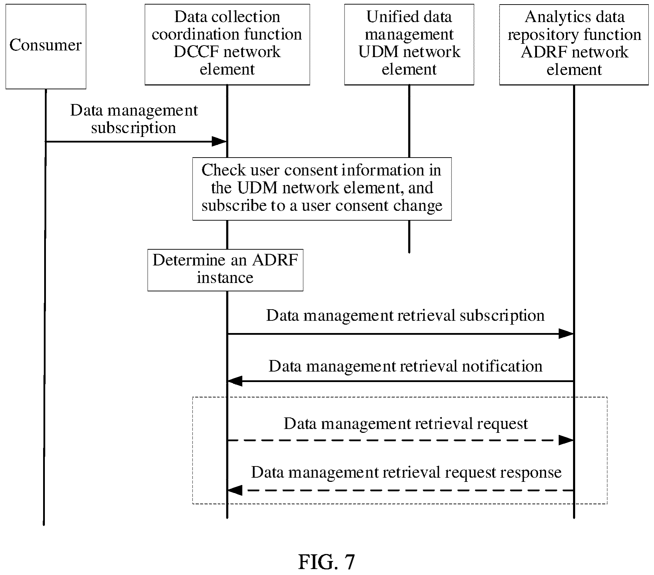

With reference to FIG. 7, in a 5G communication system, after receiving a data management subscription from a consumer, a DCCF network element may check user consent information stored in a UDM network element and subscribe to a user consent change notification. If the user consent information indicates that a terminal device performs data authorization, the DCCF network element may determine an ADRF instance and obtain data from a corresponding ADRF network element.

The DCCF network element may determine the ADRF instance by using the data management subscription from the consumer, and the data management subscription carries the ADRF instance storing the data (for example, carries an IP address of the ADRF network element). Alternatively, if the consumer does not provide an ADRF instance, but an ADRF network element registers, with the DCCF network element, data stored in the ADRF network element, the DCCF network element determines the ADRF network element that can provide data needed by the consumer.

That the DCCF network element obtains the data from the ADRF network element may include: The DCCF network element subscribes to the data from the ADRF network element by using a data management retrieval subscription (Nadrf_DataManagement_RetrievalSubscribe) service operation, and the ADRF network element feeds back a data management retrieval notification (Nadrf_DataManagement_RetrievalNotify) to the DCCF network element. Alternatively, in a procedure shown in a dashed box in FIG. 7, that the DCCF network element obtains the data from the ADRF network element may include: The DCCF network element requests to obtain the data from the ADRF network element by using a data management retrieval request (Nadrf_DataManagement_RetrievalRequest) service operation, and the ADRF network element feeds back a data management retrieval request response (Nadrf_DataManagement_RetrievalRequest Response).

The following describes embodiments of this application in detail with reference to the accompanying drawings. In a schematic flowchart of this application, an example in which a data analytics function network element, a model repository function network element, and a unified data management network element are used as execution bodies of an interaction example is used to illustrate a corresponding method. However, an execution body of the interaction example is not limited in this application. For example, the data analytics function network element in the figure may alternatively be a chip, a chip system, or a processor that supports the data analytics function network element in implementing the corresponding method, or may be a logical module or software that can implement all or some functions of the data analytics function network element. This is similar for the model repository function network element and the unified data management network element in the figure. Details are not described again.

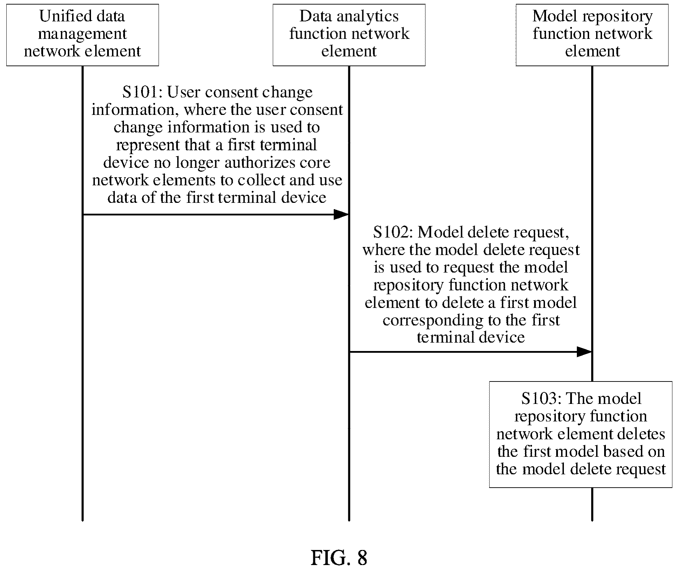

FIG. 8 is a schematic flowchart of an information transmission method according to an embodiment of this application. The information transmission method is described from a perspective of interaction between a data analytics function network element, a model repository function network element, and a unified data management network element. The data analytics function network element and the model repository function network element each are a core network element. The information transmission method includes the following steps.

S101: The unified data management network element sends user consent change information to the data analytics function network element, where the user consent change information is used to represent that a first terminal device no longer authorizes the core network element to collect and use data of the first terminal device. Correspondingly, the data analytics function network element receives the user consent change information from the unified data management network element.

The operation that the unified data management network element sends the user consent change information to the data analytics function network element may be performed when the unified data management network element determines that the first terminal device no longer authorizes the core network element to collect and use the data of the first terminal device. In other words, the unified data management network element may send, when the first terminal device that originally performs the data authorization cancels the data authorization, the user consent change information to the data analytics function network element, to notify the data analytics function network element of a message that the first terminal device cancels the data authorization. Optionally, that the first terminal device that originally performs the data authorization cancels the data authorization may be represented as: An indication #1 in user consent information that corresponds to the first terminal device and that is stored by the unified data management network element changes from representing that the first terminal device performs the data authorization to representing that the first terminal device does not perform the data authorization. The unified data management network element may perform, when the foregoing change occurs in the indication #1 in the user consent information corresponding to the first terminal device, the operation of sending the user consent change information to the data analytics function network element.

The first terminal device is a terminal device that no longer authorizes the core network element to collect and use data of the terminal device. There may be one or more first terminal devices. Optionally, when there is one first terminal device, the unified data management network element may send one piece of user consent change information to the data analytics function network element, where the user consent change information is used to represent that the first terminal device no longer authorizes the core network element to collect and use the data of the first terminal device. When there are a plurality of first terminal devices, the unified data management network element may send a plurality of pieces of user consent change information to the data analytics function network element, where the plurality of pieces of user consent change information are in one-to-one correspondence with the plurality of first terminal devices, and each piece of user consent change information is used to represent that the first terminal device corresponding to the user consent change information no longer authorizes the core network element to collect and use data of the first terminal device. Alternatively, when there are a plurality of first terminal devices, the unified data management network element sends one piece of user consent change information to the data analytics function network element, where the user consent change information is used to represent that each of the plurality of first terminal devices no longer authorizes the core network element to collect and use data of the first terminal device.

In an optional implementation, the user consent change information includes an identifier of the first terminal device and a first indication, where the first indication is used to represent that the first terminal device no longer authorizes the core network element to collect and use the data of the first terminal device. In this embodiment of this application, the identifier of the first terminal device may be, for example, a subscription permanent identifier (subscription permanent identifier, SUPI) or a generic public subscription identifier (generic public subscription identifier, GPSI) of the first terminal device.

Optionally, when one piece of user consent change information is used to represent that one first terminal device no longer authorizes the core network element to collect and use data of the first terminal device, the user consent information may include an identifier of the first terminal device and a first indication, where the first indication is used to represent that the first terminal device no longer authorizes the core network element to collect and use the data of the first terminal device. When one piece of user consent information is used to represent that each of a plurality first terminal devices no longer authorizes the core network element to collect and use data of the first terminal device, the user consent information may include a first indication and an identifier of each of the plurality of first terminal devices, where the first indication is used to represent that each of the plurality of first terminal devices no longer authorizes the core network element to collect and use the data of the first terminal device.

Optionally, when one piece of user consent change information is used to represent that one first terminal device no longer authorizes the core network element to collect and use data of the first terminal device, the user consent change information may be user consent information corresponding to the first terminal device, an indication #1 in the user consent information is used to represent that the first terminal device does not perform the data authorization, and a first indication in the user consent change information may be the indication #1 in the user consent information corresponding to the first terminal device.

Optionally, the user consent change information may be specifically used to represent that the first terminal device no longer authorizes the core network element to collect and use the data of the first terminal device based on a first purpose. In other words, the first terminal device no longer authorizes the core network element to collect and use the data of the first terminal device for the first purpose. In this case, in addition to the identifier of the first terminal device and the first indication, the user consent change information may further include an indication used to represent the first purpose, where the first indication is used to represent that the first terminal device no longer authorizes the core network element to collect and use the data of the first terminal device based on the first purpose. For example, the first purpose may be model training. In this case, the user consent change information is specifically used to represent that the first terminal device no longer authorizes the core network element to collect and use the data of the first terminal device for model training.

In an optional implementation, the method further includes: The data analytics function network element collects data of each of at least one terminal device from a network element in a network, where the at least one terminal device each is a terminal device that authorizes the core network element to collect and use the data of the terminal device. The data analytics function network element performs model training by using the data of each of the at least one terminal device, to obtain one or more models, and sends a storage request corresponding to each of the one or more models to the model repository function network element, where the storage request corresponding to each model is used to request the model repository function network element to store the model. The model repository function network element stores the one or more models, and feeds back, to the data analytics function network element, a storage request response corresponding to each of the one or more models, where the storage request response corresponding to each model is used to represent that the model repository function network element stores the model.

The data analytics function network element may determine, based on user consent information that corresponds to each of the at least one terminal device and that is obtained from the unified data management network element, that each of the at least one terminal device authorizes the core network element to collect and use the data of the terminal device. An indication #1 in the user consent information corresponding to each terminal device represents that the terminal device performs the data authorization. In addition, for specific descriptions of obtaining the user consent information by the data analytics function network element and collecting the data of the terminal device from the network element in the network by the data analytics function network element, refer to the foregoing related descriptions. Details are not described again.

S102: The data analytics function network element sends a model delete request to the model repository function network element based on the user consent change information, where the model delete request is used to request the model repository function network element to delete a first model corresponding to the first terminal device. Correspondingly, the model repository function network element receives the model delete request from the data analytics function network element.

S103: The model repository function network element deletes the first model based on the model delete request. That the model repository function network element deletes the first model may include: The model repository function network element deletes a model file corresponding to the first model and/or model information related to the first model.

In this embodiment of this application, each model may correspond to at least one terminal device, and each terminal device may correspond to at least one model. Each model is obtained through training by using data of all terminal devices corresponding to the model, and the first model is obtained through training by using the data of the first terminal device. This is not limited herein to that the first model is obtained through training by using only the data of the first terminal device. When the first model further corresponds to a terminal device other than the first terminal device, the first model is obtained through training by using the data of the first terminal device and data of the terminal device that corresponds to the first model and that is other than the first terminal device.

For example, a model #1 is obtained through training by using data of a terminal device #1 and data of a terminal device #2, a model #2 is obtained through training by using the data of the terminal device #2 and data of a terminal device #3, and a model #3 is obtained through training by using the data of the terminal device #1 and the data of the terminal device #3. In this case, the model #1 corresponds to the terminal device #1 and the terminal device #2, the model #2 corresponds to the terminal device #2 and the terminal device #3, and the model #3 corresponds to the terminal device #1 and the terminal device #3. In other words, the terminal device #1 corresponds to the model #1 and the model #3, the terminal device #2 corresponds to the model #1 and the model #2, and the terminal device #3 corresponds to the model #2 and the model #3. If the terminal device #2 no longer authorizes the core network element to collect and use the data of the terminal device #2, that is, the terminal device #2 is the first terminal device, the model #1 and the model #2 each are the first model. If neither the terminal device #2 nor the terminal device #3 authorizes the core network element to collect and use the data of the terminal device #2 or the terminal device #3, that is, the terminal device #2 and the terminal #3 each are the first terminal device, the model #1, the model #2, and the model #3 each are the first model.

In an optional implementation, the data analytics function network element stores a correspondence between each of one or more models and a terminal device. That the data analytics function network element sends the model delete request to the model repository function network element based on the user consent change information may include: The data analytics function network element determines the first terminal device based on the user consent change information, determines, based on the stored correspondence between each of the one or more models and the terminal device, the first model corresponding to the first terminal device from the one or more models, and sends the model delete request to the model repository function network element. The model delete request may include at least one of the following: an identifier (model ID) of the first model, an address (model address) of the first model, an analytics identifier (Analytics ID) corresponding to the first model, and model filter (model filter) information corresponding to the first model.

Optionally, the correspondence that is between each of the one or more models and the terminal device and that is stored by the data analytics function network element may specifically include a correspondence between an identifier of each of the one or more models and the terminal device, and/or a correspondence between an address of each of the one or more models and the terminal device.

The following separately describes cases in which the model delete request includes the identifier of the first model, the model delete request includes the address of the first model, the model delete request includes the analytics identifier corresponding to the first model, and the model delete request includes the model filter information corresponding to the first model, and how the model repository function network element deletes the first model based on the model delete request in these cases, as described in the following optional Implementation 1.1 to Implementation 1.4.

Implementation 1.1: The model delete request includes the identifier of the first model. The model repository function network element may determine and delete the first model based on the identifier of the first model in the model delete request.

It may be understood that, when the correspondence that is between each of the one or more models and the terminal device and that is stored in the data analytics function network element specifically includes the correspondence between the identifier of each model and the terminal device, the data analytics function may determine the identifier of the first model based on the first terminal device, so that a model delete request message may include the identifier of the first model.

For example, the model #1 is obtained through training by using the data of the terminal device #1, the data of the terminal device #2, and the data of the terminal device #3, the model #2 is obtained through training by using the data of the terminal device #4 and the data of the terminal device #5, an identifier of the model #1 is a model ID #1, and an identifier of the model #2 is a model ID #2. Model information stored by the data analytics function network element may include [(model ID #1) and (terminal device #1, terminal device #2, and terminal device #3)] and [(model ID #2) and (terminal device #4, and terminal device #5)]. If the terminal device #1 is the first terminal device, the model delete request may include the model ID #1. The model repository function network element may determine the model #1 having the model ID #1, and delete the model #1. In this embodiment of this application, "[(), ..., and ()]" may indicate that there is a correspondence between "()" in "[]". That (terminal device #X) is stored indicates that an identifier of the terminal device #X is stored. For example, that the data analytics function network element stores the (terminal device #1) indicates that the data analytics function network element stores an identifier of the terminal device #1. Details are not described below again.

Implementation 1.2: The model delete request includes the address of the first model. The model repository function network element may determine and delete the first model based on the address of the first model in the model delete request.

It may be understood that, when the correspondence that is between each of the one or more models and the terminal device and that is stored in the data analytics function network element specifically includes the correspondence between the address of each model and the terminal device, the data analytics function may determine the address of the first model based on the first terminal device, so that a model delete request message may include the address of the first model.

For example, the model #1 is obtained through training by using the data of the terminal device #1, the data of the terminal device #2, and the data of the terminal device #3, the model #2 is obtained through training by using the data of the terminal device #4 and the data of the terminal device #5, an address of the model #1 is a model address #1, and an address of the model #2 is a model address #2. Model information stored by the data analytics function network element may include [(model address #1) and (terminal device #1, terminal device #2, and terminal device #3)] and [(model address #2) and (terminal device #4 and terminal device #5)]. If the terminal device #1 is the first terminal device, the model delete request may include the model address #1. The model repository function network element may determine the model #1 having the model address #1, and delete the model #1.

Implementation 1.3: The model delete request includes the analytics identifier corresponding to the first model. The model repository function network element may determine and delete, based on the analytics identifier in the model delete request, each model corresponding to the analytics identifier in the one or more models.

It may be understood that this implementation may be applied to a case in which the data analytics function network element stores the correspondence between each model and the terminal device, and the data analytics function network element and the model repository function network element both store the correspondence between each model and the analytics identifier. The data analytics function network element may determine the first model based on the first terminal device, and then determine, based on the first model, the analytics identifier corresponding to the first model, so that the model delete request may include the analytics identifier corresponding to the first model. Each model may correspond to at least one analytics identifier, and each analytics identifier may correspond to at least one model.

For example, the model #1 is obtained through training by using the data of the terminal device #1 and the data of the terminal device #2, and the model #2 is obtained through training by using the data of the terminal device #3 and the data of the terminal device #4. The model #3 is obtained through training by using the data of the terminal device #5 and the data of the terminal device #6. Analytics identifiers corresponding to the model #1 and the model #2 each are an Analytics ID #1, and an analytics identifier corresponding to the model #3 is an Analytics ID #2. Model information stored in the data analytics function network element may include: [(Analytics ID #1), (model #1), and (terminal device #1 and terminal device #2)], [(Analytics ID #1), (model #2), and (terminal device #3 and terminal device #4)], and [(Analytics ID #2), (model #3), and (terminal device #5 and terminal device #6)]. Model information stored in the model repository function network element may include [(Analytics ID #1) and (model #1)], [(Analytics ID #1) and (model #2)], and [(Analytics ID #2) and (model #3)]. If the terminal device #1 is the first terminal device, the model delete request may include the Analytics ID #1. The model repository function network element may determine and delete the model #1 and the model #2 corresponding to the Analytics ID #1. In this embodiment of this application, that (model #X) is stored indicates that indication information (for example, an identifier and/or address of the model #X) indicating the model #X is stored. For example, that the data analytics function network element stores the (model #1) indicates that the data analytics function network element stores indication information indicating the model #1. Details are not described below again.

Optionally, when each model corresponding to an analytics identifier in the one or more models is the first model, the model delete request includes the analytics identifier. In other words, when each model corresponding to an analytics identifier is a model corresponding to a terminal device that no longer authorizes the core network element to collect and use data of the terminal device, the model delete request may include the analytics identifier, and the model repository function network element deletes each model corresponding to the analytics identifier. Optionally, the method may further include: The data analytics function network element determines the analytics identifier corresponding to the first model, where if each model corresponding to the analytics identifier in the one or more models is the first model, the model delete request includes the analytics identifier corresponding to the first model. For example, the terminal device #1 and the terminal device #2 each are the first terminal device, the terminal device #1 corresponds to the model #1 and the model #2, the terminal device #2 corresponds to the model #2 and the model #3, and an analytics identifier #1 corresponds to the model #1, the model #2, and the model #3. It can be learned that each model corresponding to the analytics identifier #1 is the first model. In this case, the model delete request information may include the analytics identifier #1.

Implementation 1.4: The model delete request includes the model filter information corresponding to the first model. The model repository function network element may determine and delete, based on the model filter information in the model delete request, each model corresponding to the model filter information in the one or more models.

It may be understood that this implementation may be applied to a case in which the data analytics function network element stores the correspondence between each model and the terminal device, and the data analytics function network element and the model repository function network element both store the correspondence between each model and the model filter information. The data analytics function network element may determine the first model based on the first terminal device, and then determine, based on the first model, the model filter information corresponding to the first model, so that the model delete request may include the model filter information corresponding to the first model. Each piece of model filter information may correspond to at least one model. The model filter information corresponding to each model may be, for example, at least one area of interest (area of interest, AOI) corresponding to the model and/or at least one network slice corresponding to the model, where the network slice may be identified by using single network slice selection assistance information (single network slice selection assistance information, S-NSSAI).

For example, the model #1 is obtained through training by using the data of the terminal device #1 and the data of the terminal device #2, the model #2 is obtained through training by using the data of the terminal device #3 and the data of the terminal device #4, and the model #3 is obtained through training by using the data of the terminal device #5 and the data of the terminal device #6. Model filter information corresponding to the model #1 includes an AOI #1, model filter information corresponding to the model #2 includes an AOI #2 and S-NSSAI #1, and model filter information corresponding to the model #3 includes the S-NSSAI #1. Model information stored in the data analytics function network element may include: [(model #1), (terminal device #1 and terminal device #2), and (AOI #1)], [(model #2), (terminal device #3 and terminal device #4), and (AOI #1 and S-NSSAI #1)], and [(model #3), (terminal device #5 and terminal device #6), and (S-NSSAI #1)]. Model information stored by the model repository function network element may include [(model #1) and (AOI #1)], [(model #2) and (AOI #2 and S-NSSAI #1)], and [(model #3) and (S-NSSAI #1)]. If the terminal device #1 is the first terminal device, the model delete request may include the AOI #1. The model repository function network element may determine and delete the model #1 and the model #2 corresponding to the AOI #1.

Optionally, when each model corresponding to an AOI in the one or more models is the first model, the model delete request includes the AOI. In other words, when each model corresponding to an AOI is a model corresponding to a terminal device that no longer authorizes the core network element to collect and use data of the terminal device, the model delete request may include the AOI, and the model repository function network element deletes each model corresponding to the AOI. Optionally, the method may further include: The data analytics function network element determines an AOI corresponding to the first model, where if each model corresponding to the AOI in the one or more models is the first model, the model delete request includes the AOI corresponding to the first model. For example, the terminal device #1 and the terminal device #2 each are the first terminal device, the terminal device #1 corresponds to the model #1 and the model #2, the terminal device #2 corresponds to the model #2 and the model #3, and the AOI #1 corresponds to the model #1, the model #2, and the model #3. It can be learned that each model corresponding to the AOI #1 is the first model. In this case, the model delete request information may include the AOI #1.

Optionally, when each model corresponding to S-NSSAI in the one or more models is the first model, the model delete request includes the S-NSSAI. In other words, when each model corresponding to S-NSSAI is a model corresponding to a terminal device that no longer authorizes the core network element to collect and use data of the terminal device, the model delete request may include the S-NSSAI, and the model repository function network element deletes each model corresponding to the S-NSSAI. Optionally, the method may further include: The data analytics function network element determines S-NSSAI corresponding to the first model, where if each model corresponding to the S-NSSAI in the one or more models is the first model, the model delete request includes the S-NSSAI corresponding to the first model.

In addition, each of Implementation 1.1 to Implementation 1.4 may be used as a separate implementation. Besides, any plurality of implementations in Implementation 1.1 to Implementation 1.4 may be combined to form a new implementation. The model repository function network element may determine and delete the first model based on any one or more of combined implementations.

In an optional implementation, the model repository function network element stores a correspondence between each of the one or more models and the terminal device. The model delete request may include at least one of the following: an identifier of the first terminal device, an identifier of a device group to which the first terminal device belongs, and a fourth indication, where the fourth indication corresponds to the identifier of the first terminal device or corresponds to the identifier of the device to which the first terminal device belongs. That the model repository function network element deletes the first model based on the model delete request may include: The model repository function network element determines the first terminal device based on the model delete request, determines, based on the stored correspondence between each of the one or more models and the terminal device, the first model corresponding to the first terminal device from the one or more models, and deletes the first model.

Optionally, the method further includes: The data analytics function network element sends, to the model repository function network element, first information corresponding to each of one or more models, where the first information indicates one or more terminal devices. The model repository function network element stores a correspondence between each model and the terminal device indicated by the first information corresponding to each model. Optionally, the first information corresponding to each model may be carried in a storage request that corresponds to the model and that is sent by the data analytics function network element to the model repository function network element. The storage request corresponding to each model is used to request the model repository function network element to store the model. In this embodiment of this application, a sequence of the operation that the data analytics function network element sends, to the model repository function network element, the first information corresponding to each of the one or more models and the operation that the data analytics function network element receives the user consent change information from the unified data management network element is not limited. For example, the operation that the data analytics function network element sends, to the model repository function network element, the first information corresponding to each of the one or more models may be earlier than the operation that the data analytics function network element receives the user consent change information from the unified data management network element.

The following separately describes three cases in which the model delete request includes the identifier of the first terminal device, the model delete request includes the identifier of the device group to which the first terminal device belongs, and the model delete request includes the fourth indication, and the first information in the three cases, as described in the following optional Implementation 2.1 to Implementation 2.3.

Implementation 2.1: The model delete request includes the identifier of the first terminal device. The first information corresponding to each model includes an identifier of each of one or more terminal devices corresponding to the model.

It may be understood that, when the correspondence that is between each of the one or more models and the terminal device and that is stored in the model repository function network element specifically includes the correspondence between each model and the identifier of the terminal device, the model repository function network element may determine and delete the first model based on the identifier of the first terminal device in the model delete request.

For example, the model #1 corresponds to the terminal device #1 and the terminal device #2, and the model #2 corresponds to the terminal device #2 and the terminal device #3. The data analytics function network element sends, to the model repository function network element, first information #1 corresponding to the model #1 and first information #2 corresponding to the model #2, where the first information #1 includes an identifier of the terminal device #1 and an identifier of the terminal device #2, and the first information #2 includes the identifier of the terminal device #2 and an identifier of the terminal device #3. Model information stored by the model repository function network element may include [(model #1) and (terminal device #1 and terminal device #2)] and [(model #2) and (terminal device #2 and terminal device #3)]. If the terminal device #1 is the first terminal device, the model delete request may include the identifier of the terminal device #1, and the model repository function network element may determine and delete the model #1 corresponding to the terminal device #1.

Implementation 2.2: The model delete request includes the identifier of the device group to which the first terminal device belongs. The first information corresponding to each model includes an identifier of a device group to which one or more terminal devices corresponding to the model belong.

Specifically, when a model corresponds to a plurality of terminal devices, first information corresponding to the model may include one or more device groups, and each device group includes some or all of the plurality of terminal devices corresponding to the model. In this embodiment of this application, that a model corresponds to a device group indicates that the model corresponds to all terminal devices included in the device group.

It may be understood that, when the correspondence that is between each of the one or more models and the terminal device and that is stored in the model repository function network element specifically includes the correspondence between each model and the identifier of the device group to which the terminal device belongs, the model repository function network element may determine and delete the first model based on the identifier of the device group in the model delete request.

For example, a device group #1 includes the terminal device #1 and the terminal device #2, a device group #2 includes the terminal device #3 and the terminal device #4, and a device group #3 includes the terminal device #5 and the terminal device #6. The model #1 is obtained through training by using data of a terminal device in the device group #1, the model #2 is obtained through training by using data of a terminal device in the device group #2, and the model #3 is obtained through training by using data of terminal devices in the device group #1 and the device group #3. The data analytics function network element sends, to the model repository function network element, first information #1 corresponding to the model #1, first information #2 corresponding to the model #2, and first information #3 corresponding to the model #3, where the first information #1 includes an identifier of the device group #1, the first information #2 includes an identifier of the device group #2, and the first information #3 includes the identifier of the device group #1 and an identifier of the device group #3. Model information stored by the model repository function network element may include [(model #1) and (device group #1)], [(model #2) and (device group #2)], and [(model #3) and (device group #1 and device group #3)]. If the terminal device #1 is the first terminal device, the model delete request may include the identifier of the device group #1. The model repository function network element may determine and delete the model #1 and the model #3 corresponding to the device group #1. In this embodiment of this application, that (device group #X) is stored indicates that an identifier of the device group #X is stored. For example, that the model repository function network element stores the (device group #1) indicates that the model repository function network element stores the identifier of the device group #1.

Implementation 2.3: The model delete request includes the fourth indication, and the fourth indication corresponds to the identifier of the first terminal device or corresponds to the identifier of the device group to which the first terminal device belongs. The first information corresponding to each model includes an indication (indicator) corresponding to one or more terminal devices corresponding to the model or an indication corresponding to a device group to which one or more terminal devices corresponding to the model belong.

It may be understood that, when the correspondence that is between each of the one or more models and the terminal device and that is stored in the model repository function network element specifically includes the correspondence between each model and the indication corresponding to the terminal device, the model repository function network element may determine and delete the first model based on the fourth indication in the model delete request.

For example, an indicator #1 corresponds to the terminal device #1 and the terminal device #2, an indicator #2 corresponds to the terminal device #3 and the terminal device #4, and an indicator #3 corresponds to the terminal device #5 and the terminal device #6. The model #1 is obtained through training by using the data of the terminal device #1 and the data of the terminal device #2, the model #2 is obtained through training by using the data of the terminal device #3 and the data of the terminal device #4, and the model #3 is obtained through training by using the data of the terminal device #1, the data of the terminal device #2, the data of the terminal device #5, and the data of the terminal device #6. The data analytics function network element may send, to the model repository function network element, first information #1 corresponding to the model #1, first information #2 corresponding to the model #2, and first information #3 corresponding to the model #3, where the first information #1 includes the indicator #1, the first information #2 includes the indicator #2, and the first information #3 includes the indicator #1 and the indicator #3. The model information stored by the model repository function network element may include [(model #1) and (indicator #1)], [(model #2) and (indicator #2)], and [(model #3) and (indicator #1 and indicator #3)]. If the terminal device #1 is the first terminal device, the model delete request may include the indicator #1. The model repository function network element may determine and delete the model #1 and the model #3 corresponding to the indicator #1.

In addition, this embodiment of this application does not limit whether only one of the data analytics function network element and the model repository function network element stores the correspondence between each of the one or more models and the terminal device, or whether the data analytics function network element and the model repository function network element both store the correspondence between each of the one or more models and the terminal device. Specifically, the data analytics function network element stores the correspondence between each of the one or more models and the terminal device, and the model repository function network element does not store the correspondence between each of the one or more models and the terminal device. Alternatively, the data analytics function network element does not store the correspondence between each of the one or more models and the terminal device, and the model repository function network element stores the correspondence between each of the one or more models and the terminal device. Alternatively, the data analytics function network element and the model repository function network element both store the correspondence between each of the one or more models and the terminal device. The foregoing three manners are all optional implementations in this embodiment of this application.

In an optional implementation, the method further includes: The model repository function network element sends model delete response information to the data analytics function network element, where the model delete response information is used to represent that the model repository function network element deletes the first model. In other words, the model repository function network element may notify, by using the model delete response information, the data analytics function network element that the first model has been deleted.

In an optional implementation, when the first model corresponds to a plurality of terminal devices, the method may further include: The data analytics function network element updates the first model by using data of a terminal device that is in the plurality of terminal devices corresponding to the first model and that is other than the first terminal device. The data analytics function network element sends a model storage request to the model repository function network element, where the model storage request is used to request the model repository function network element to store an updated first model.

The first model and the updated first model may have a same identifier and/or address. Optionally, that the data analytics function network element updates the first model may be: The data analytics function network element performs model training again by using the data of the terminal device that is in the plurality of terminal devices corresponding to the first model and that is other than the first terminal device, to obtain the updated first model. Alternatively, that the data analytics function network element updates the first model may be: The data analytics function network element updates the first model by using a model single-point delete technology, so that model update costs can be reduced, and model use efficiency can be improved. For specific descriptions of the model single-point delete technology, refer to the foregoing related descriptions. Details are not described again.

In an optional manner, the data analytics function network element locally stores the first model. In this case, the data analytics function network element may update the first model based on the locally stored first model by using the data of the terminal device that is in the plurality of terminal devices corresponding to the first model and that is other than the first terminal device.

In another optional manner, before the data analytics function network element updates the first model, the method may further include: The data analytics function network element sends a model obtaining request to the model repository function network element, where the model obtaining request is used to obtain the first model from the model repository function network element. The model repository function network element may provide the model file of the first model or the address of the first model for the data analytics function network element. When the model repository function network element provides the address of the first model for the data analytics function network element, the data analytics function network element may download the model file of the first model based on the address of the first model. In addition, an implementation in which the data analytics function network element requests to obtain the first model from the model repository function network element may be applied to a case in which the data analytics function network element does not locally store the first model.

In still another optional manner, the model delete request is specifically a model obtaining request, and the model obtaining request is further used to obtain the first model from the model repository function network element. In other words, by using the model obtaining request, the data analytics function network element obtains the first model from the model repository function network element, and requests the model repository function network element to delete the first model corresponding to the first terminal device. An implementation in which the data analytics function network element requests to obtain the first model from the model repository function network element may be applied to a case in which the data analytics function network element does not locally store the first model.

In addition, in this embodiment of this application, a sequence of the operation that the model repository function network element provides the first model for the data analytics function network element and the operation that the model repository function network element deletes the first model is not limited. Optionally, when the data analytics function network element expects the model repository function network element to delete the first model after providing the first model for the data analytics function network element, the model obtaining request may include an indication, where the indication indicates the model repository function network element to delete the first model after providing the first model for the data analytics function network element. In this case, the model repository function network element may first perform the operation of providing the first model for the data analytics function network element, and then perform the operation of deleting the first model.

In an optional implementation, before the data analytics function network element sends the model delete request to the model repository function network element based on the user consent change information, the method further includes: determining that a second indication from the unified data management network element is not received, where the second indication is used to represent that when the first terminal device no longer authorizes the core network element to collect and use the data of the first terminal device, the first terminal device allows the core network element to retain the first model. This implementation may be applied to a case in which the first terminal device does not allow, when the first terminal device no longer authorizes the core network element to collect and use the data of the first terminal device, the core network elements to retain the first model. Optionally, when the first terminal device allows, when the first terminal device no longer authorizes the core network element to collect and use the data of the first terminal device, the core network elements to retain the first model, the method may further include: The unified data management network element may send the second indication to the data analytics function network element, and the data analytics function network element may not perform the operation of sending the model delete request to the model repository function network element based on the user consent change information.

It may be understood that, the data analytics function network element may determine, depending on whether the second indication is received, whether the first terminal device allows, when the first terminal device no longer authorizes the core network element to collect and use the data of the first terminal device, the core network elements to retain the first model. Specifically, when receiving the second indication, the data analytics function network element learns that when the first terminal device no longer authorizes the core network element to collect and use the data of the first terminal device, the first terminal device allows the core network element to retain the first model. When receiving no second indication, the data analytics function network element may consider that when the first terminal device no longer authorizes the core network element to collect and use the data of the first terminal device, the first terminal device does not allow the core network element to retain the first model. If the first terminal device does not allow, when the first terminal device no longer authorizes the core network element to collect and use the data of the first terminal device, the core network elements to retain the first model, the data analytics function network element performs the operation of sending the model delete request to the model repository function network element based on the user consent change information, to request the model repository function network element to delete the first model. This helps ensure data privacy security of the first terminal device. If the first terminal device allows, when the first terminal device no longer authorizes the core network element to collect and use the data of the first terminal device, the core network elements to retain the first model, the data analytics function network element may not perform the operation of sending the model delete request to the model repository function network element based on the user consent change information, and may continue to retain and use the first model on the premise of protecting data privacy security of the first terminal device. This improves availability of the model. Optionally, a message indicating whether the first terminal device allows, when the first terminal device no longer authorizes the core network element to collect and use the data of the first terminal device, the core network elements to retain the first model may be an agreement signed in advance by an operator with the first terminal device.

In an optional implementation, before the data analytics function network element sends the model delete request to the model repository function network element based on the user consent change information, the method further includes: receiving a third indication from the unified data management network element, where the third indication is used to represent that when the first terminal device no longer authorizes the core network element to collect and use the data of the first terminal device, the first terminal device does not allow the core network element to retain the first model. In other words, the data analytics function network element may learn, by receiving the third indication, that when the first terminal device no longer authorizes the core network element to collect and use the data of the first terminal device, the first terminal device does not allow the core network element to retain the first model, and then perform the operation of sending the model delete request to the model repository function network element based on the user consent change information, to request the model repository function network element to delete the first model. This helps ensure the data privacy security of the first terminal device.

In an optional implementation, when the first terminal device allows, when the first terminal device no longer authorizes the core network element to collect and use the data of the first terminal device, the core network elements to retain the first model, the user consent information and/or the user consent change information corresponding to the first terminal device carry/carries the second indication. When the first terminal device does not allow, when the first terminal device no longer authorizes the core network element to collect and use the data of the first terminal device, the core network elements to retain the first model, the user consent information and/or the user consent change information corresponding to the first terminal device do/does not carry the second indication, and/or the user consent information and/or the user consent change information corresponding to the first terminal device carry/carries the third indication. The second indication is used to represent that when the first terminal device no longer authorizes the core network element to collect and use the data of the first terminal device, the first terminal device allows the core network element to retain the first model, and the third indication is used to represent that when the first terminal device no longer authorizes the core network element to collect and use the data of the first terminal device, the first terminal device does not allow the core network element to retain the first model. A value of the second indication may be represented by "1" or "yes", and a value of the third indication may be represented by "0" or "no". This is not limited.

The second indication and the third indication are different parameters, or the second indication and the third indication are two cases of a same parameter. Optionally, in the scenario in which the second indication and the third indication are two cases of a same parameter, the second indication and the third indication may be represented by the indication #3. The user consent information and/or the user consent change information carry/carries the indication #3, and the indication #3 is used to represent whether the first terminal device allows, when the first terminal device no longer authorizes the core network element to collect and use the data of the first terminal device, the core network elements to retain the first model. The second indication and the third indication are two cases of the indication #3. When the indication #3 is used to represent that when the first terminal device no longer authorizes the core network element to collect and use the data of the first terminal device, the first terminal device allows the core network element to retain the first model, the indication #3 is the second indication. When the indication #3 is used to represent that when the first terminal device no longer authorizes the core network element to collect and use the data of the first terminal device, the first terminal device does not allow the core network element to retain the first model, the indication #3 is the third indication.

Optionally, a value of the indication #3 may be "0" or "1", to indicate whether the first terminal device allows, when the first terminal device no longer authorizes the core network element to collect and use the data of the first terminal device, the core network elements to retain the first model. For example, when the value of the indication #3 is "1", it indicates that when the first terminal device no longer authorizes the core network element to collect and use the data of the first terminal device, the first terminal device allows the core network element to retain the first model, that is, the indication #3 whose value is "1" is the second indication. When the value of the indication #3 is "0", it indicates that when the first terminal device no longer authorizes the core network element to collect and use the data of the first terminal device, the first terminal device does not allow the core network element to retain the first model, that is, the indication #3 whose value is "0" is the third indication. In addition, the value of the indication #3 may be alternatively represented in another manner. For example, when the value of the indication #3 is "yes", it indicates that when the first terminal device no longer authorizes the core network element to collect and use the data of the first terminal device, the first terminal device allows the core network element to retain the first model. When the value of the indication #3 is "no", it indicates that when the first terminal device no longer authorizes the core network element to collect and use the data of the first terminal device, the first terminal device does not allow the core network element to retain the first model. This is not limited.

In addition, optionally, when the user consent change signal is specifically used to represent that the first terminal device no longer authorizes the core network element to collect and use the data of the first terminal device based on a first purpose, the foregoing second indication is specifically used to represent that when the first terminal device no longer authorizes the core network element to collect and use the data of the first terminal device based on the first purpose, the first terminal device allows the core network element to retain the first model, and the foregoing third indication is specifically used to represent that when the first terminal device no longer authorizes the core network element to collect and use the data of the first terminal device based on the first purpose, the first terminal device does not allow the core network element to retain the first model.

In addition, optionally, for the terminal device that cancels the data authorization, in addition to deleting the first model stored in the model repository function network element, data that is related to the first terminal device and that is stored in the model repository function network element may be further deleted, to further improve the data privacy security of the terminal device.

In conclusion, in the information transmission method, the data analytics function network element receives the user consent change information from the unified data management network element, where the user consent change information is used to represent that the first terminal device no longer authorizes the core network element to collect and use the data of the first terminal device, and the data analytics function network element and the model repository function network element are the core network element. The data analytics function network element sends the model delete request to the model repository function network element based on the user consent change information. The model delete request is used to request the model repository function network element to delete the first model corresponding to the first terminal device. The model repository function network element deletes the first model based on the model delete request. It can be learned that, for a terminal device that no longer authorizes the core network element to collect and use data of the terminal device, namely, a terminal device that cancels the data authorization for the core network elements, the data analytics function network element may request the model repository function network element to delete a model corresponding to the terminal device, and the model repository function network element deletes the model corresponding to the terminal device. In this way, data privacy security of the terminal device can be improved. This helps ensure the data privacy security of the terminal device.

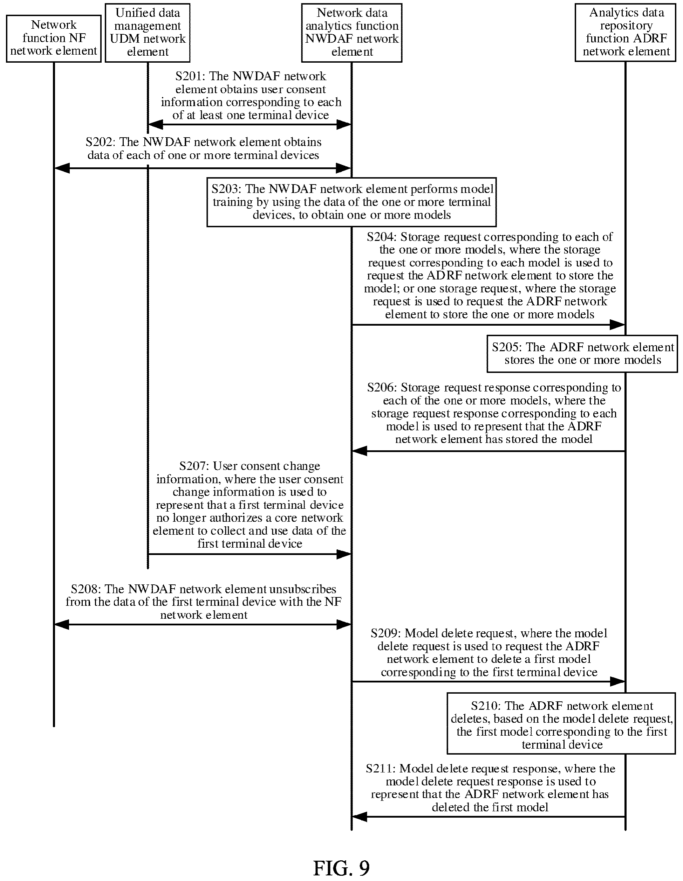

With reference to FIG. 9, FIG. 10, and FIG. 11, the following describes an information transmission method provided in embodiments of this application by using a 5G communication system as an example. A data analytics function network element is an NWDAF network element, a unified data management network element is a UDM network element, and a model repository function network element is an ADRF network element.

FIG. 9 is a diagram of another information transmission method according to an embodiment of this application. The method includes the following steps.

S201: The NWDAF network element determines at least one terminal device whose data needs to be collected, and obtains, from the UDM network element, user consent information corresponding to each of the at least one terminal device.

Optionally, that the NWDAF network element obtains, from the UDM network element, the user consent information corresponding to each of the at least one terminal device may include: The NWDAF network element sends, to the UDM network element by using an Nudm_SDM_Subscribe service operation, a message used to subscribe to the user consent information corresponding to each terminal device. The UDM network element feeds back, to the NWDAF network element by using an Nudm_SDM_Notify service operation, a notification message carrying the user consent information corresponding to each terminal device.

S202: The NWDAF network element determines, based on the user consent information, one or more terminal devices that are in the at least one terminal device and that authorize core network elements to collect and use data of the one or more terminal devices, and obtains the data of each of the one or more terminal devices from an NF network element.

Optionally, that the NWDAF network element obtains the data of each of the one or more terminal devices from the NF network element may include: The NWDAF network element sends, to the NF network element by using an Nnf_EventExposure_Subscribe service operation, a message used to subscribe to the data of the one or more terminal devices. The NF network element feeds back, to the NWDAF network element by using an Nnf_EventExposure_Notify service operation, a notification message carrying the data of the one or more terminal devices.

S203: The NWDAF network element performs model training by using the data of the one or more terminal devices, to obtain one or more models.

Optionally, after obtaining the one or more models, the NWDAF network element may further store a correspondence between each of the one or more models and the terminal device.

S204: The NWDAF network element sends, to the ADRF network element, a storage request corresponding to each of the one or more models, where the storage request corresponding to each model is used to request the ADRF network element to store the model; or the NWDAF network element sends one storage request to the ADRF network element, where the storage request is used to request the ADRF network element to store the one or more models. Correspondingly, the ADRF network element receives the storage request corresponding to each of the one or more models from the NWDAF network element, or receives the one storage request from the NWDAF network element.

Optionally, the NWDAF network element may send, to the ADRF network element by using a model management storage request (Nadrf_modelManagement_StorageRequest) service operation, the storage request corresponding to each model.

S205: The ADRF network element stores the one or more models.

In an optional manner, the model storage request corresponding to each model may include first information corresponding to the model, and the first information corresponding to each model indicates one or more terminal devices corresponding to the model. The first information corresponding to each model may include an identifier of each of the one or more terminal devices corresponding to the model, an identifier of a device group to which the one or more terminal devices corresponding to the model belong, an indication corresponding to the one or more terminal devices corresponding to the model, or an indication corresponding to a device group to which the one or more terminal devices corresponding to the model belong. In this case, the ADRF network element may further store the correspondence between each model and the terminal device based on the first information corresponding to each model.

In addition, the storage request corresponding to each model may further include one or more of the following: an identifier of the model, an address of the model, an analytics identifier corresponding to the model, model filter information corresponding to the model, a model validity period (Model Validity Period) of the model, and model spatial validity (Model Spatial Validity) of the model.

S206: The ADRF network element sends, to the NWDAF network element, a storage request response corresponding to each of the one or more models, where the storage request response corresponding to each model is used to represent that the ADRF network element has stored the model. Correspondingly, the NWDAF network element receives the storage request response corresponding to each of the one or more models from the ADRF network element.

Optionally, the ADRF network element may send, to the NWDAF network element by using a model management storage request response (Nadrf_modelManagement_StorageRequestResponse) service operation, the storage request response corresponding to each model.

S207: The UDM network element sends user consent change information to the NWDAF network element, where the user consent change information is used to represent that a first terminal device no longer authorizes the core network element to collect and use data of the first terminal device. Correspondingly, the NWDAF network element receives the user consent change information from the UDM network element.

Optionally, the UDM network element may send the user consent change information to the NWDAF network element by using the Nudm_SDM_Notify service operation.

S208: The NWDAF network element unsubscribes from the data of the first terminal device with the NF network element.

Optionally, that the NWDAF network element unsubscribes from the data of the first terminal device with the NF network element may include: The NWDAF network element sends, to the NF network element by using an Nnf_EventExposure_Unsubscribe service operation, a message used to unsubscribe from the data of the first terminal device. The NF network element feeds back, to the NWDAF network element by using the Nnf_EventExposure_Notify service operation, a message used to represent that the data of the first terminal device has been unsubscribed from.

S209: The NWDAF network element sends a model delete request to the ADRF network element based on the user consent change information, where the model delete request is used to request the ADRF network element to delete a first model corresponding to the first terminal device. Correspondingly, the ADRF network element receives the model delete request from the NWDAF network element.

Optionally, the NWDAF network element may send the model delete request to the ADRF network element by using a model management delete request (Nadrf_modelManagement_DeleteRequest) service operation.

In an optional implementation, when the ADRF network element stores the correspondence between each model and the terminal device, the model delete request may include an identifier of the first terminal device, an identifier of a device group to which the first terminal device belongs, or a fourth indication, where the fourth indication corresponds to the identifier of the first terminal device or corresponds to the identifier of the device to which the first terminal device belongs.

In another optional implementation, when the NWDAF network element stores the correspondence between each model and the terminal device, the model delete request may include one or more of the following: an identifier of the first model, an address of the first model, an analytics identifier corresponding to the first model, and model filter information corresponding to the first model.

S210: The ADRF network element deletes, based on the model delete request, the first model corresponding to the first terminal device.

S211: The ADRF network element sends a model delete request response to the NWDAF network element, where the model delete request response is used to represent that the ADRF network element has deleted the first model. Correspondingly, the NWDAF network element receives the model delete request response from the ADRF network element.

Optionally, the ADRF network element may send the model delete request response to the NWDAF network element by using a model management delete response (Nadrf_modelManagement_DeleteResponse) service operation.

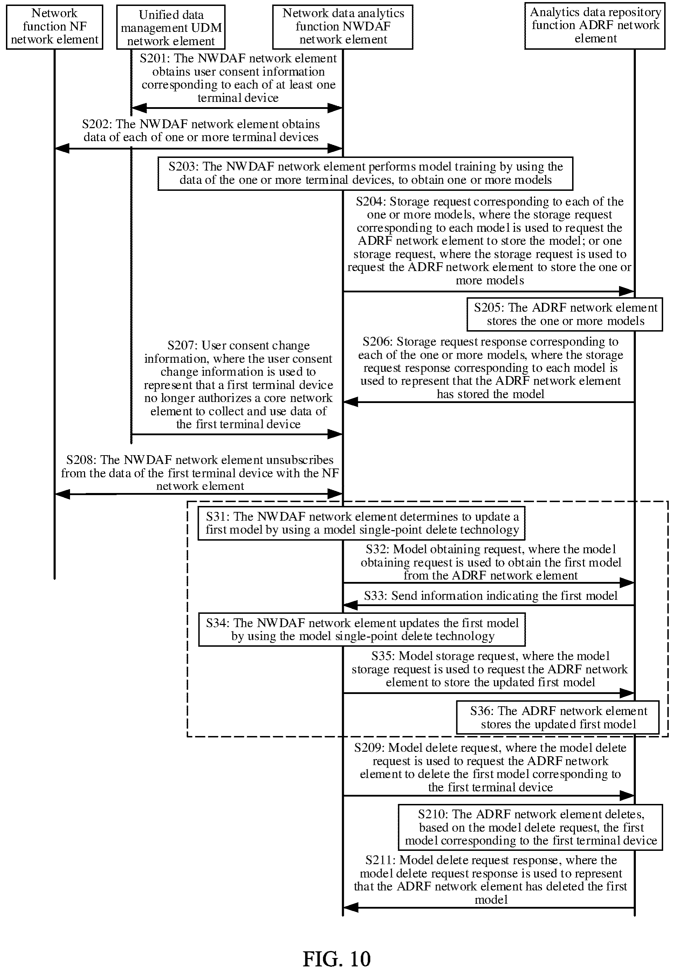

In an optional implementation, when the first model corresponds to a plurality of terminal devices, and the plurality of terminal devices include not only the first terminal device but also another terminal device, the information transmission method shown in FIG. 9 may further include an operation of updating the first model by the data analytics function network element. As shown in FIG. 10, after step S208 and before step S209 in the information transmission method shown in FIG. 9, the method may further include the following steps.

S31: The NWDAF network element determines to update the first model by using a model single-point delete technology.

S32: The NWDAF network element sends a model obtaining request to the ADRF network element, where the model obtaining request is used to obtain the first model from the ADRF network element. Correspondingly, the ADRF network element receives the model obtaining request from the NWDAF network element.

Optionally, the NWDAF network element may send the model obtaining request to the ADRF network element by using a model management retrieval subscription (Nadrf_ModelManagement _RetrievalSubscribe) service operation.

S33: The ADRF network element sends, to the NWDAF network element, information indicating the first model. For example, the information indicating the first model includes a model file of the first model or the address of the first model.

Optionally, the ADRF network element may send, to the NWDAF network element by using a model management retrieval notification (Nadrf_ModelManagement_RetrievalNotify) service operation, the information indicating the first model.

S34: The NWDAF network element updates the first model by using the model single-point delete technology.

S35: The NWDAF network element sends a model storage request to the ADRF network element, where the model storage request is used to request the ADRF network element to store the updated first model. Correspondingly, the ADRF network element receives the model storage request from the NWDAF network element.

S36: The ADRF network element stores the updated first model.

In addition, in another optional implementation, the model obtaining request sent by the NWDAF network element to the ADRF network element in S32 may further carry an indication. The indication indicates the ADRF network element to delete the first model after sending the first model to the NWDAF network element. In this implementation, the information transmission method shown in FIG. 10 may not include S209 to S211. In other words, the NWDAF network element may not need to additionally send, to the ADRF network element, the model delete request indicating the ADRF network element to delete the first model, and after performing S33, the ADRF network element may directly delete the first model.

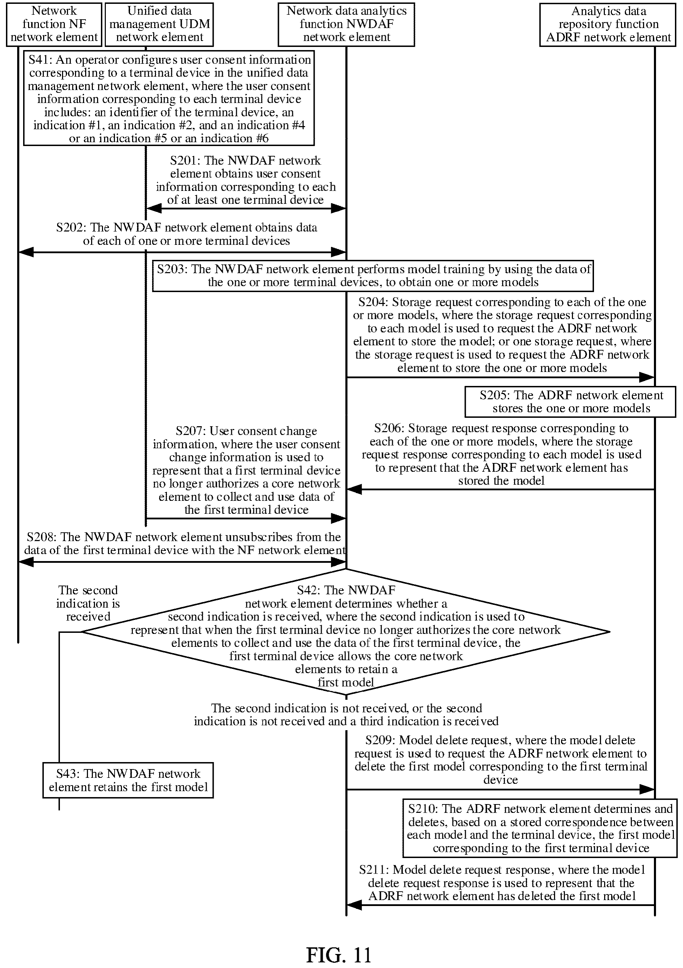

In an optional implementation, an operator may further sign the following agreement with a terminal device in advance about whether the terminal device allows, when the terminal device no longer authorizes the core network element to collect and use the data of the terminal device, the core network elements to retain a model corresponding to the terminal device. In this case, as shown in FIG. 11, the information transmission method shown in FIG. 9 may further include the following steps.

Before step S201, the method further includes: S41: The operator configures the user consent information corresponding to the terminal device in the unified data management network element, where the user consent information corresponding to each terminal device includes: an identifier of the terminal device, an indication #1, an indication #2, and an indication #4 or an indication #5 or an indication #6. The indication #1 is used to represent whether the terminal device performs data authorization. The indication #2 indicates a purpose of data collection. The indication #4 is used to represent whether the terminal device allows, when the terminal device no longer authorizes the core network element to collect and use the data of the terminal device, the core network elements to retain the model corresponding to the terminal device. The indication #5 is used to represent that when the terminal device no longer authorizes the core network element to collect and use the data of the terminal device, the terminal device allows the core network element to retain the model corresponding to the terminal device. The indication #6 is used to represent that when the terminal device no longer authorizes the core network element to collect and use the data of the terminal device, the terminal device does not allow the core network element to retain the model corresponding to the terminal device.

For the user consent information corresponding to the first terminal device, the indication #4 is an indication #3, and the indication #3 is used to represent whether the first terminal device allows, when the first terminal device no longer authorizes the core network element to collect and use the data of the first terminal device, the core network elements to retain the first model, the indication #5 is a second indication, and the second indication is used to represent that when the first terminal device no longer authorizes the core network element to collect and use the data of the first terminal device, the first terminal device allows the core network element to retain the first model, and the indication #6 is a third indication, and the third indication is used to represent that when the first terminal device no longer authorizes the core network element to collect and use the data of the first terminal device, the first terminal device does not allow the core network element to retain the first model.

In this case, in addition to the identifier of the terminal device, the indication #1, and the indication #2, the user consent information corresponds to each terminal device and that is obtained by the NWDAF network element in step S201 may further include the indication #4, the indication #5, or the indication #6. Optionally, when the NWDAF network element obtains, from the UDM network element by using the Nudm_SDM_Subscribe service operation or the Nudm_SDM_Notify service operation, the user consent information corresponding to each of the at least one terminal device, the Nudm_SDM_Notify service operation may carry the indication #4, the indication #5, or the indication #6.

In addition, the user consent change information received by the NWDAF network element in step S207 may further include the indication #3, the second indication, or the third indication.

After step S208, the method further includes: S42: The NWDAF network element determines whether the second indication is received, where the second indication is used to represent that when the first terminal device no longer authorizes the core network element to collect and use the data of the first terminal device, the first terminal device allows the core network element to retain the first model. If receiving the second indication, the NWDAF network element performs S43: The NWDAF network element retains the first model. If the NWDAF network element does not receive the second indication, or the NWDAF network element does not receive the second indication and receives the third indication, S209 to S211 are performed.

For specific descriptions of the steps in FIG. 9, FIG. 10, and FIG. 11, refer to related descriptions in the information transmission method shown in FIG. 8. Details are not described again. In addition, this embodiment may further include another implementation of the information transmission method shown in FIG. 8, and there are also corresponding beneficial effects. Details are not described again.

To implement functions in the method provided in embodiments of this application, the data analytics function network element or the model repository function network element may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

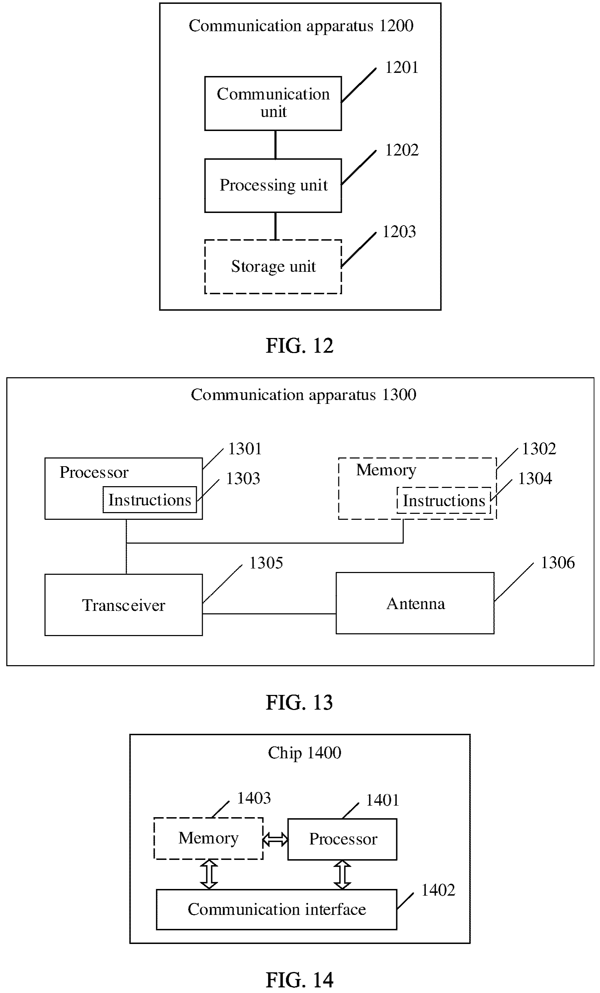

As shown in FIG. 12, an embodiment of this application provides a communication apparatus 1200. The communication apparatus 1200 may be a data analytics function network element or a model repository function network element, or the communication apparatus 1200 may be a component (for example, an integrated circuit or a chip) of the data analytics function network element or a component (for example, an integrated circuit or a chip) of the model repository function network element, and is configured to implement the method in the method embodiment of this application. The communication apparatus 1200 may include a communication unit 1201 and a processing unit 1202. The processing unit 1202 is configured to control a communication unit 1201 to perform data/signaling receiving and sending. Optionally, the communication apparatus 1200 may further include a storage unit 1203.

In a possible design, the communication unit 1201 is configured to receive user consent change information from a unified data management network element, where the user consent change information is used to represent that a first terminal device no longer authorizes a core network element to collect and use data of the first terminal device, and the communication apparatus 1200 and the model repository function network element are the core network element.

The processing unit 1202 is configured to send a model delete request to the model repository function network element based on the user consent change information, where the model delete request is used to request the model repository function network element to delete a first model corresponding to the first terminal device.

In an optional implementation, the processing unit 1202 sends the model delete request to the model repository function network element based on the user consent change information, and is specifically configured to: determine the first terminal device based on the user consent change information; and determine, based on a stored correspondence between each of one or more models and a terminal device, the first model corresponding to the first terminal device from the one or more models. The communication unit 1201 is further configured to send the model delete request to the model repository function network element. The model delete request includes at least one of the following: an identifier of the first model, an address of the first model, an analytics identifier corresponding to the first model, and model filter information corresponding to the first model.

In an optional implementation, the communication unit 1201 is further configured to send first information corresponding to each of one or more models to the model repository function network element, where the one or more models include the first model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the user consent change information includes the identifier of the first terminal device and a first indication, where the first indication is used to represent that the first terminal device no longer authorizes the core network element to collect and use the data of the first terminal device.

In an optional implementation, the user consent change information is specifically used to represent that the first terminal device no longer authorizes the core network element to collect and use the data of the first terminal device based on a first purpose. The user consent change information further includes an indication used to represent the first purpose. The first indication is used to represent that the first terminal device no longer authorizes the core network element to collect and use the data of the first terminal device based on the first purpose.

In an optional implementation, the first model corresponds to a plurality of terminal devices. The processing unit 1202 is further configured to update the first model by using data of a terminal device that is in the plurality of terminal devices corresponding to the first model and that is other than the first terminal device. The communication unit 1201 is further configured to send a model storage request to the model repository function network element, where the model storage request is used to request the model repository function network element to store an updated first model.

In an optional implementation, the model delete request is specifically a model obtaining request, and the model obtaining request is further used to obtain the first model from the model repository function network element.

In an optional implementation, the processing unit 1202 is further configured to determine, before sending the model delete request to the model repository function network element based on the user consent change information, that a second indication from the unified data management network element is not received, where the second indication is used to represent that when the first terminal device no longer authorizes the core network element to collect and use the data of the first terminal device, the first terminal device allows the core network element to retain the first model.

In an optional implementation, the communication unit 1201 is further configured to receive, before sending the model delete request to the model repository function network element based on the user consent change information, a third indication from the unified data management network element, where the third indication is used to represent that when the first terminal device no longer authorizes the core network element to collect and use the data of the first terminal device, the first terminal device does not allow the core network element to retain the first model.

In an optional implementation, the user consent change information further includes a third indication, and the third indication is used to represent that when the first terminal device no longer authorizes the core network element to collect and use the data of the first terminal device, the first terminal device does not allow the core network element to retain the first model.

In another possible design, the communication unit 1201 is configured to receive a model delete request from the data analytics function network element, where the model delete request is used to request the communication apparatus 1200 to delete a first model corresponding to a first terminal device, the first terminal device is a terminal device that no longer authorizes a core network element to collect and use data of the first terminal device, and the data analytics function network element and the communication apparatus 1200 are the core network element. The processing unit 1202 is configured to delete the first model based on the model delete request.

In an optional implementation, the model delete request includes at least one of the following: an identifier of the first model, an address of the first model, an analytics identifier corresponding to the first model, and model filter information corresponding to the first model.

In an optional implementation, the model delete request includes an identifier of the first terminal device or an identifier of a device group to which the first terminal device belongs. The processing unit 1202 deletes the first model based on the model delete request, and is specifically configured to: determine the first terminal device based on the model delete request; determine, based on the stored correspondence between each of the one or more models and the terminal device, the first model corresponding to the first terminal device from the one or more models; and delete the first model.

In an optional implementation, the communication unit 1201 is further configured to receive first information corresponding to each of one or more models from the data analytics function network element, where the one or more models include the first model. The processing unit 1202 is further configured to store a correspondence between each model and a terminal device indicated by the first information corresponding to each model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the first model corresponds to a plurality of terminal devices. The communication unit 1201 is further configured to receive a model storage request from the data analytics function network element, where the model storage request is used to request the communication apparatus 1200 to store the updated first model. The processing unit 1202 is further configured to store the updated first model. The updated first model is obtained by updating the first model by using data of a terminal device that is in the plurality of terminal devices corresponding to the first model and that is other than the first terminal device.

In an optional implementation, the model delete request is specifically a model obtaining request, and the model obtaining request is further used to obtain the first model from the communication apparatus 1200.

This embodiment of this application and the foregoing method embodiments are based on a same concept, and bring same technical effects. For a specific principle, refer to the descriptions in the foregoing embodiments. Details are not described again.

An embodiment of this application further provides a communication apparatus 1300, as shown in FIG. 13. The communication apparatus 1300 may be a data analytics function network element or a model repository function network element, or may be a chip, a chip system, a processor, or the like that supports the data analytics function network element in implementing the foregoing method, or may be a chip, a chip system, a processor, or the like that supports the model repository function network element in implementing the foregoing method. The apparatus may be configured to implement the method described in the foregoing method embodiments. For details, refer to the descriptions in the foregoing method embodiments.

The communication apparatus 1300 may include one or more processors 1301. The processor may be configured to implement some or all functions of the data analytics function network element or the model repository function network element by using a logic circuit or by running a computer program. The processor 1301 may be a general-purpose processor, a special-purpose processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus 1300 may include one or more memories 1302, where the memory stores instructions 1304. The instructions may be run on the processor 1301, so that the communication apparatus 1300 performs the method described in the foregoing method embodiment. Optionally, the memory 1302 may further store data. The processor 1301 and the memory 1302 may be separately disposed, or may be integrated together.

The memory 1302 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1300 may further include a transceiver 1305 and an antenna 1306. The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function.

In a possible design, the communication apparatus 1300 is configured to implement a function of the data analytics function network element in this embodiment of this application.

The transceiver 1305 is configured to receive user consent change information from a unified data management network element, where the user consent change information is used to represent that a first terminal device no longer authorizes a core network element to collect and use data of the first terminal device, and the communication apparatus 1300 and the model repository function network element are the core network element.

The processor 1301 is configured to send a model delete request to the model repository function network element based on the user consent change information, where the model delete request is used to request the model repository function network element to delete a first model corresponding to the first terminal device.

In an optional implementation, the processor 1301 sends the model delete request to the model repository function network element based on the user consent change information, and is specifically configured to: determine the first terminal device based on the user consent change information; and determine, based on a stored correspondence between each of one or more models and a terminal device, the first model corresponding to the first terminal device from the one or more models. The transceiver 1305 is further configured to send the model delete request to the model repository function network element. The model delete request includes at least one of the following: an identifier of the first model, an address of the first model, an analytics identifier corresponding to the first model, and model filter information corresponding to the first model.

In an optional implementation, the transceiver 1305 is further configured to send first information corresponding to each of one or more models to the model repository function network element, where the one or more models include the first model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the user consent change information includes the identifier of the first terminal device and a first indication, where the first indication is used to represent that the first terminal device no longer authorizes the core network element to collect and use the data of the first terminal device.

In an optional implementation, the user consent change information is specifically used to represent that the first terminal device no longer authorizes the core network element to collect and use the data of the first terminal device based on a first purpose. The user consent change information further includes an indication used to represent the first purpose. The first indication is used to represent that the first terminal device no longer authorizes the core network element to collect and use the data of the first terminal device based on the first purpose.

In an optional implementation, the first model corresponds to a plurality of terminal devices. The processor 1301 is further configured to update the first model by using data of a terminal device that is in the plurality of terminal devices corresponding to the first model and that is other than the first terminal device. The transceiver 1305 is further configured to send a model storage request to the model repository function network element, where the model storage request is used to request the model repository function network element to store an updated first model.

In an optional implementation, the model delete request is specifically a model obtaining request, and the model obtaining request is further used to obtain the first model from the model repository function network element.

In an optional implementation, the processor 1301 is further configured to determine, before sending the model delete request to the model repository function network element based on the user consent change information, that a second indication from the unified data management network element is not received, where the second indication is used to represent that when the first terminal device no longer authorizes the core network element to collect and use the data of the first terminal device, the first terminal device allows the core network element to retain the first model.

In an optional implementation, the transceiver 1305 is further configured to receive, before sending the model delete request to the model repository function network element based on the user consent change information, a third indication from the unified data management network element, where the third indication is used to represent that when the first terminal device no longer authorizes the core network element to collect and use the data of the first terminal device, the first terminal device does not allow the core network element to retain the first model.

In an optional implementation, the user consent change information further includes a third indication, and the third indication is used to represent that when the first terminal device no longer authorizes the core network element to collect and use the data of the first terminal device, the first terminal device does not allow the core network element to retain the first model.

In another possible design, the communication apparatus 1300 is configured to implement a function of the model repository function network element in this embodiment of this application.

The transceiver 1305 is configured to receive a model delete request from the data analytics function network element, where the model delete request is used to request the communication apparatus 1300 to delete a first model corresponding to a first terminal device, the first terminal device is a terminal device that no longer authorizes a core network element to collect and use data of the first terminal device, and the data analytics function network element and the communication apparatus 1300 are the core network element.

The processor 1301 is configured to delete the first model based on the model delete request.

In an optional implementation, the model delete request includes at least one of the following: an identifier of the first model, an address of the first model, an analytics identifier corresponding to the first model, and model filter information corresponding to the first model.

In an optional implementation, the model delete request includes an identifier of the first terminal device or an identifier of a device group to which the first terminal device belongs. The processor 1301 deletes the first model based on the model delete request, and is specifically configured to: determine the first terminal device based on the model delete request; determine, based on the stored correspondence between each of the one or more models and the terminal device, the first model corresponding to the first terminal device from the one or more models; and delete the first model.

In an optional implementation, the transceiver 1305 is further configured to receive first information corresponding to each of one or more models from the data analytics function network element, where the one or more models include the first model. The processor 1301 is further configured to store a correspondence between each model and a terminal device indicated by the first information corresponding to each model. The first information includes an identifier of each of one or more terminal devices, and the model delete request includes the identifier of the first terminal device. Alternatively, the first information includes an identifier of a device group to which one or more terminal devices belong, and the model delete request includes the identifier of the device group to which the first terminal device belongs.

In an optional implementation, the first model corresponds to a plurality of terminal devices. The transceiver 1305 is further configured to receive a model storage request from the data analytics function network element, where the model storage request is used to request the communication apparatus 1300 to store the updated first model. The processor 1301 is further configured to store the updated first model. The updated first model is obtained by updating the first model by using data of a terminal device that is in the plurality of terminal devices corresponding to the first model and that is other than the first terminal device.

In an optional implementation, the model delete request is specifically a model obtaining request, and the model obtaining request is further used to obtain the first model from the communication apparatus 1300.

In another possible design, the processor 1301 may include a transceiver configured to implement receiving and sending functions. For example, the transceiver may be a transceiver circuit, a communication interface, or an interface circuit. The transceiver circuit, the communication interface, or the interface circuit configured to implement the receiving and sending functions may be separated, or may be integrated together. The transceiver circuit, the communication interface, or the interface circuit may be configured to read and write code/data. Alternatively, the transceiver circuit, the communication interface, or the interface circuit may be configured to transmit or transfer a signal.

In still another possible design, optionally, the processor 1301 may store instructions 1303, and the instructions 1303 are run on the processor 1301, to enable the communication apparatus 1300 to perform the method described in the foregoing method embodiment. The instructions 1303 may be fixed in the processor 1301. In this case, the processor 1301 may be implemented by hardware.

In still another possible design, the communication apparatus 1300 may include a circuit, and the circuit may implement a sending, receiving, or communication function in the foregoing method embodiment. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be a data analytics function network element or a model repository function network element. However, a scope of the communication apparatus described in embodiments of this application is not limited thereto, and a structure of the communication apparatus may not be limited by FIG. 13. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, like a modem (modulator);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

For a case in which the communication apparatus may be a chip or a chip system, refer to a diagram of a structure of a chip shown in FIG. 14. A chip 1400 shown in FIG. 14 includes a processor 1401 and a communication interface 1402. There may be one or more processors 1401, and there may be a plurality of communication interfaces 1402. The processor 1401 may be a logic circuit, and the communication interface 1402 may be an input/output interface, an input interface, or an output interface. The chip 1400 may further include a memory 1403.

In a design, the chip is configured to implement a function of the data analytics function network element in this embodiment of this application.

The communication interface 1402 is configured to receive user consent change information from a unified data management network element, where the user consent change information is used to represent that a first terminal device no longer authorizes a core network element to collect and use data of the first terminal device, and the chip 1400 and a model repository function network element are the core network element.

The processor 1401 is configured to send a model delete request to the model repository function network element based on the user consent change information, where the model delete request is used to request the model repository function network element to delete a first model corresponding to the first terminal device.

In another design, the chip is configured to implement a function of the model repository function network element in this embodiment of this application.

The communication interface 1402 is configured to receive a model delete request from a data analytics function network element, where the model delete request is used to request the chip 1400 to delete a first model corresponding to a first terminal device, the first terminal device is a terminal device that no longer authorizes a core network element to collect and use data of the first terminal device, and the data analytics function network element and the chip 1400 are the core network element.

The processor 1401 is configured to delete the first model based on the model delete request.

In embodiments of this application, the communication apparatus 1300 and the chip 1400 may further perform the implementation of the communication apparatus 1200. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing information transmission method are based on a same concept, and bring same technical effects. For a specific principle, refer to the descriptions in the foregoing information transmission method. Details are not described again.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes the data analytics function network element and the model repository function network element in the foregoing aspects. In another possible design, the system may further include another device that interacts with the data analytics function network element and/or the model repository function network element in the solutions provided in this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An information transmission method, applied to a data analytics function network element, wherein the method comprises:
receiving user consent change information from a unified data management network element, wherein the user consent change information is used to represent that a first terminal device no longer authorizes a core network element to collect and use data of the first terminal device, and the data analytics function network element and a model repository function network element are the core network element; and
sending a model delete request to the model repository function network element based on the user consent change information, wherein the model delete request is used to request the model repository function network element to delete a first model corresponding to the first terminal device.

2. The method according to claim 1, wherein the sending the model delete request to the model repository function network element based on the user consent change information comprises:
determining the first terminal device based on the user consent change information;
determining, based on a stored correspondence between each of one or more models and a terminal device, the first model corresponding to the first terminal device from the one or more models; and
sending the model delete request to the model repository function network element, wherein the model delete request comprises at least one of the following: an identifier of the first model, an address of the first model, an analytics identifier corresponding to the first model, and model filter information corresponding to the first model.

3. The method according to claim 1, wherein the method further comprises:
sending first information corresponding to each of one or more models to the model repository function network element, wherein the one or more models comprise the first model, wherein
the first information comprises an identifier of each of one or more terminal devices, and the model delete request comprises an identifier of the first terminal device; or
the first information comprises an identifier of a device group to which one or more terminal devices belong, and the model delete request comprises an identifier of a device group to which the first terminal device belongs.

4. The method according to any one of claims 1 to 3, wherein
the user consent change information comprises the identifier of the first terminal device and a first indication, wherein the first indication is used to represent that the first terminal device no longer authorizes the core network element to collect and use the data of the first terminal device.

5. The method according to claim 4, wherein
the user consent change information is specifically used to represent that the first terminal device no longer authorizes the core network element to collect and use the data of the first terminal device based on a first purpose; and
the user consent change information further comprises an indication used to represent the first purpose, and the first indication is used to represent that the first terminal device no longer authorizes the core network element to collect and use the data of the first terminal device based on the first purpose.

6. The method according to any one of claims 1 to 5, wherein the first model corresponds to a plurality of terminal devices, and the method further comprises:
updating the first model by using data of a terminal device that is in the plurality of terminal devices corresponding to the first model and that is other than the first terminal device; and
sending a model storage request to the model repository function network element, wherein the model storage request is used to request the model repository function network element to store an updated first model.

7. The method according to claim 6, wherein
the model delete request is specifically a model obtaining request, and the model obtaining request is further used to obtain the first model from the model repository function network element.

8. The method according to any one of claims 1 to 7, wherein before the sending the model delete request to the model repository function network element based on the user consent change information, the method further comprises:
determining that a second indication from the unified data management network element is not received, wherein the second indication is used to represent that when the first terminal device no longer authorizes the core network element to collect and use the data of the first terminal device, the first terminal device allows the core network element to retain the first model.

9. The method according to any one of claims 1 to 8, wherein before the sending the model delete request to the model repository function network element based on the user consent change information, the method further comprises:
receiving a third indication from the unified data management network element, wherein the third indication is used to represent that when the first terminal device no longer authorizes the core network element to collect and use the data of the first terminal device, the first terminal device does not allow the core network element to retain the first model.

10. The method according to any one of claims 1 to 8, wherein
the user consent change information further comprises a third indication, wherein the third indication is used to represent that when the first terminal device no longer authorizes the core network element to collect and use the data of the first terminal device, the first terminal device does not allow the core network element to retain the first model.

11. An information transmission method, wherein the method comprises:
receiving, by a data analytics function network element, user consent change information from a unified data management network element, wherein the user consent change information is used to represent that a first terminal device no longer authorizes a core network element to collect and use data of the first terminal device, and the data analytics function network element and a model repository function network element are the core network element;
sending, by the data analytics function network element, a model delete request to the model repository function network element based on the user consent change information, wherein the model delete request is used to request the model repository function network element to delete a first model corresponding to the first terminal device; and
deleting, by the model repository function network element, the first model based on the model delete request.

12. The method according to claim 11, wherein before the sending, by the data analytics function network element, the model delete request to the model repository function network element based on the user consent change information, the method further comprises:
sending, by the unified data management network element, a third indication to the data analytics function network element, wherein the third indication is used to represent that when the first terminal device no longer authorizes the core network element to collect and use the data of the first terminal device, the first terminal device does not allow the core network element to retain the first model.

13. A communication system, wherein the system comprises:
a data analytics function network element, configured to receive user consent change information from a unified data management network element, wherein the user consent change information is used to represent that a first terminal device no longer authorizes a core network element to collect and use data of the first terminal device based on a first purpose, and the data analytics function network element and a model repository function network element are the core network element, wherein
the data analytics function network element is further configured to send a model delete request to the model repository function network element based on the user consent change information, wherein the model delete request is used to request the model repository function network element to delete a first model corresponding to the first terminal device; and
the model repository function network element is configured to delete the first model based on the model delete request.

14. The system according to claim 13, wherein the system further comprises:
the unified data management network element, configured to send a third indication to the data analytics function network element, wherein the third indication is used to represent that when the first terminal device no longer authorizes the core network element to collect and use the data of the first terminal device based on the first purpose, the first terminal device does not allow the core network element to retain the first model.

15. A communication apparatus, wherein the apparatus comprises:
a communication unit, configured to receive user consent change information from a unified data management network element, wherein the user consent change information is used to represent that a first terminal device no longer authorizes a core network element to collect and use data of the first terminal device based on a first purpose, and the communication apparatus and a model repository function network element are the core network element; and
a processing unit, configured to send a model delete request to the model repository function network element based on the user consent change information, wherein the model delete request is used to request the model repository function network element to delete a first model corresponding to the first terminal device.

16. A communication apparatus, comprising a memory and a processor, wherein
the memory is configured to store instructions or a computer program; and
the processor is configured to execute the computer program or the instructions stored in the memory, to enable the communication apparatus to perform the method according to any one of claims 1 to 10.

17. A computer-readable storage medium, wherein the computer-readable storage medium stores a computer program, and when the computer program is run, the method according to any one of claims 1 to 10 is implemented.

18. A computer program product, wherein the computer program product comprises computer program code, and when the computer program code is run, the method according to any one of claims 1 to 10 is implemented.
